# EUROPÄISCHE PATENTSCHRIFT

(11) **EP 4 217 243 B1**
(45) Veröffentlichungstag und Bekanntmachung des Hinweises auf die Patenterteilung: **22.07.2026**
(21) Anmeldenummer: 21777947.9
(22) Anmeldetag: 10.09.2021
(51) Int. Cl.: B60T 8/32, B60T 13/68

(54) **ELEKTROHYDRAULISCHES BREMSENSTEUERGERÄT FÜR EIN KRAFTFAHRZEUG UND BREMSSYSTEM MIT EINEM SOLCHEN BREMSENSTEUERGERÄT**
ELECTROHYDRAULIC BRAKE CONTROLLER FOR A MOTOR VEHICLE, AND BRAKE SYSTEM COMPRISING SUCH A BRAKE CONTROLLER
UNITÉ DE COMMANDE DE FREINAGE ÉLECTRO-HYDRAULIQUE CONÇUE POUR UN VÉHICULE AUTOMOBILE ET SYSTÈME DE FREINAGE COMPRENANT UNE TELLE UNITÉ DE COMMANDE DE FREINAGE

(30) Priorität: 28.09.2020 EP 20465564; 06.11.2020 DE 102020213997
(43) Veröffentlichungstag der Anmeldung: 02.08.2023
(73) Patentinhaber: AUMOVIO Germany GmbH, 60488 Frankfurt am Main (DE)
(72) Erfinder: BILLER, Harald, 60488 Frankfurt am Main (DE); LINDEN, Ulrich, 60488 Frankfurt am Main (DE); BAECHLE, Martin, 60488 Frankfurt am Main (DE); ULLRICH, Thorsten, 60488 Frankfurt am Main (DE); ADAM, Marius-Vasilica, 60488 Frankfurt am Main (DE)
(74) Vertreter: Aumovio Corporation
(86) Internationale Anmeldenummer: PCT/DE2021/200121
(87) Internationale Veröffentlichungsnummer: WO 2022/063366

(56) Entgegenhaltungen:
- DE-A1- 102013 224 870
- DE-A1- 102017 216 617
- DE-A1- 102018 207 765

## Beschreibung

Die Erfindung betrifft ein elektrohydraulisches Bremsensteuergerät gemäß dem Oberbegriff von Anspruch 1 sowie ein Bremssystem mit einem solchen Bremsensteuergerät.

Aus der DE 10 2017 216 617 A1 ist ein Bremsensteuergerät bekannt mit vier Ausgangsanschlüssen für vier hydraulisch betätigbare Radbremsen, einer ersten elektronischen Steuer- und Regeleinheit, einer zweiten elektronischen Steuer- und Regeleinheit, einem Druckmittelvorratsbehälter und einem Einlass- und Auslassventil je Ausgangsanschluss, wobei der jeweilige Ausgangsanschluss über das Auslassventil mit dem Druckmittelvorratsbehälter verbunden ist. Um für das hochautomatisierte Fahren geeignet zu sein und auf eine mechanische und/oder hydraulische Rückfallebene, in welcher der Fahrer durch Muskelkraft die Radbremsen betätigt kann, verzichten zu können, umfasst das Bremsensteuergerät eine erste und eine zweite elektrisch ansteuerbare hydraulische Druckquelle, wobei die erste Druckquelle von der ersten elektronischen Steuer- und Regeleinheit und die zweite Druckquelle von der zweiten elektronischen Steuer- und Regeleinheit betätigt wird. Weiterhin ist eine elektrisch betätigbare Kreistrennvorrichtung vorgesehen, durch welche die Bremsanlage im stromlosen Zustand in einen ersten Bremskreis mit der ersten Druckquelle und zwei der Radbremsen und einen zweiten Bremskreis mit der zweiten Druckquelle und den zwei anderen Radbremsen getrennt ist.

Das Dokument DE 10 2013 224 870 A1 offenbart eine Bremsbetätigungseinheit für eine "Brake-by-Wire"-Kraftfahrzeugbremsanlage mit einem Bremspedal-betätigbaren Hauptbremszylinder und einer elektrisch steuerbaren Druckbereitstellungseinrichtung.

Das Dokument DE 10 2018 207 765 A1 offenbart ein elektronisches Bremssystem.

Es ist Aufgabe der vorliegenden Erfindung, ein alternatives, für das hochautomatisierte Fahren geeignetes elektrohydraulisches Bremsensteuergerät sowie Bremssystem für ein Kraftfahrzeug bereitzustellen, welches auf eine mechanische und/oder hydraulische Rückfallebene verzichten kann und dabei dennoch eine hohe Verfügbarkeit besitzt und so eine ausreichende Sicherheit für hochautomatisiertes Fahren bzw. eine Autopilotfunktion bietet.

Diese Aufgabe wird erfindungsgemäß durch ein elektrohydraulisches Bremsensteuergerät gemäß Anspruch 1 und ein Bremssystem gemäß Anspruch 15 gelöst.

Der Erfindung liegt der Gedanke zugrunde, dass das Bremsensteuergerät eine elektrisch ansteuerbare hydraulische Druckquelle, ein Einlass- und Auslassventil für jede der zumindest vier Radbremsen, eine erste elektronische Steuer- und Regeleinheit und eine zweite elektronische Steuer- und Regeleinheit umfasst, wobei die Druckquelle durch eine Zylinder-Kolben-Anordnung mit einem Druckraum gebildet wird, deren Kolben durch einen elektromechanischen Aktuator vor- und zurückschiebbar ist, wobei der Druckraum über ein erstes elektrisch betätigbares Druckzuschaltventil mit einem Bremsleitungsabschnitt verbunden ist, an welchen die zumindest vier Einlassventile angeschlossen sind. Weiterhin sind elektrische und/oder elektronische Mittel vorgesehen, die dazu konfiguriert sind, dass bei einem Ausfall der ersten elektronischen Steuer- und Regeleinheit der elektromechanische Aktuator mittels der zweiten elektronischen Steuer- und Regeleinheit angesteuert wird und einen Druck zur Betätigung der Radbremsen aufbaut, und dass bei einem Ausfall der zweiten elektronischen Steuer- und Regeleinheit der elektromechanische Aktuator mittels der ersten elektronischen Steuer- und Regeleinheit angesteuert wird und einen Druck zur Betätigung der Radbremsen aufbaut.

Der Bremsleitungsabschnitt verbindet den Ausgangsanschluss des ersten Druckzuschaltventils mit jedem der Eingangsanschlüsse der (zumindest vier) Einlassventile. Der Bremsleitungsabschnitt verbindet bevorzugt die zumindest vier Einlassventile, d.h. die Einlassventile der ersten Ausgangsanschlüsse und der zweiten Ausgangsanschlüsse, direkt miteinander. In diesem Sinne ist das Bremsensteuergerät bzw. dessen Druckbereitstellung durch die hydraulische Druckquelle bevorzugt einkreisig ausgeführt.

Bevorzugt ist in dem Bremsleitungsabschnitt kein Ventil angeordnet, z.B. kein elektrisch- oder hydraulisch betätigbares Ventil und kein Rückschlagventil. Der Bremsleitungsabschnitt wird bevorzugt radbremsseitig von den (zumindest vier) Einlassventilen und Druckquellenseitig von dem ersten Druckzuschaltventil oder, falls ein zweites Druckzuschaltventil vorhanden ist, von dem ersten und dem zweiten Druckzuschaltventil begrenzt. Sollte der Bremsleitungsabschnitt über ein Trennventil mit dem Druckmittelvorratsbehälter verbunden sein, wird der Bremsleitungsabschnitt Druckmittelvorratsbehälterseitig von dem Trennventil begrenzt.

Bei einem Ausfall einer der elektronischen Steuer- und Regeleinheiten wird also der elektromechanische Aktuator mittels der anderen elektronischen Steuer- und Regeleinheit angesteuert und es wird ein Druck zur Betätigung der Radbremsen in der brake-by-wire Betriebsart zur Betriebsbremsung aufbaut.

Durch die eine funktionsfähige elektronische Steuer- und Regeleinheit wird der elektromechanische Aktuator zumindest mit einem Teil seiner Leistung zum Aufbau eines Druckes zur Betätigung der Radbremsen betrieben.

Gemäß einer bevorzugten Ausführungsform des erfindungsgemäßen Bremsensteuergerät umfassen die elektrischen und/oder elektronischen Mittel, dass der elektromechanische Aktuator einen doppelt gewickelten Elektromotor mit einer ersten Motorwicklung und einer zweiten Motorwicklung umfasst, wobei die erste Motorwicklung, besonders bevorzugt ausschließlich, von der ersten elektronischen Steuer- und Regeleinheit und die zweite Motorwicklung, besonders bevorzugt ausschließlich, von der zweiten elektronischen Steuer- und Regeleinheit angesteuert wird. So kann auf eine zweite elektrisch ansteuerbare hydraulische Druckquelle verzichtet werden. Auch nach einem elektrischen oder elektronischen Einzelfehler ist es möglich alle Radbremsen zu bremsen.

Bevorzugt umfasst das elektrohydraulische Bremsensteuergerät zumindest zwei erste Ausgangsanschlüsse und zwei zweite Ausgangsanschlüsse für zumindest vier hydraulisch betätigbare Radbremsen, eine elektrisch ansteuerbare hydraulische Druckquelle, eine erste elektronische Steuer- und Regeleinheit, eine zweite elektronische Steuer- und Regeleinheit, einen, insbesondere unter Atmosphärendruck stehenden, Druckmittelvorratsbehälter, ein Einlassventil je erstem und zweitem Ausgangsanschluss, und ein Auslassventil je erstem und zweitem Ausgangsanschluss, über welches der jeweilige Ausgangsanschluss mit dem Druckmittelvorratsbehälter verbunden ist, wobei die Druckquelle durch eine Zylinder-Kolben-Anordnung mit einem Druckraum und einem Kolben gebildet wird, wobei der Kolben durch einen elektromechanischen Aktuator vor- und zurückschiebbar ist, wobei der Druckraum über ein erstes elektrisch betätigbares Druckzuschaltventil mit einem Bremsleitungsabschnitt verbunden ist, an welchen die Einlassventile angeschlossen sind, und wobei der elektromechanische Aktuator einen doppelt gewickelten Elektromotor mit einer ersten Motorwicklung und einer zweiten Motorwicklung umfasst, wobei die erste Motorwicklung von der ersten elektronischen Steuer- und Regeleinheit und die zweite Motorwicklung von der zweiten elektronischen Steuer- und Regeleinheit angesteuert wird. Der doppelt gewickelte Elektromotor mit der Ansteuerung der ersten Motorwicklung von der ersten elektronischen Steuer- und Regeleinheit und der Ansteuerung der zweiten Motorwicklung von der zweiten elektronischen Steuer- und Regeleinheit stellt elektrische und/oder elektronische Mittel dar, die dazu konfiguriert sind, dass bei einem Ausfall der ersten elektronischen Steuer- und Regeleinheit der elektromechanische Aktuator mittels der zweiten elektronischen Steuer- und Regeleinheit angesteuert wird und einen Druck zur Betätigung der Radbremsen aufbaut, und dass bei einem Ausfall der zweiten elektronischen Steuer- und Regeleinheit der elektromechanische Aktuator mittels der ersten elektronischen Steuer- und Regeleinheit angesteuert wird und einen Druck zur Betätigung der Radbremsen aufbaut.

Der doppelt gewickelte Elektromotor umfasst also eine erste Motorwicklung und eine zweite Motorwicklung, wobei jede der beiden Motorwicklungen jeweils von einer der beiden elektronischen Steuer- und Regeleinheiten angesteuert wird. In gewissem Sinne ist der Elektromotor zweiteilig ausgeführt. Werden beide Motorwicklungen von beiden elektronischen Steuer- und Regeleinheiten angesteuert, liefert der Elektromotor die volle Leistung. Im Falle, dass nur eine der beiden elektronischen Steuer- und Regeleinheiten die entsprechende Motorwicklung ansteuert, kann die Druckquelle Druck aufbauen, wenn auch in verminderter Höhe und mit verminderter Dynamik, wobei mit diesem Druck alle zumindest vier Radbremsen beaufschlagt werden. Das Fahrzeug kann dennoch abgebremst und zum Stillstand gebracht werden.

Besonders bevorzugt umfasst die erste elektronische Steuer- und Regeleinheit eine erste Endstufe zur Bereitstellung von Phasenspannungen und eine erste Treiberstufe zur Ansteuerung der ersten Endstufe, wobei die erste Endstufe mit der ersten Motorwicklung verbunden ist, und die zweite elektronische Steuer- und Regeleinheit umfasst eine zweite Endstufe zur Bereitstellung von Phasenspannungen und eine zweite Treiberstufe zur Ansteuerung der zweiten Endstufe, wobei die zweite Endstufe mit der zweiten Motorwicklung verbunden ist.

Vorteilhafterweise umfassen die erste und die zweite elektronische Steuer- und Regeleinheit jeweils einen Motorprozessor.

Vorteilhafterweise wird die erste elektronische Steuer- und Regeleinheit von einer ersten elektrischen Energieversorgung versorgt und die zweite elektronische Steuer- und Regeleinheit von einer zweiten, von der ersten Energieversorgung unabhängigen, elektrischen Energieversorgung versorgt.

Gemäß einer anderen bevorzugten Ausführungsform des erfindungsgemäßen Bremsensteuergerät umfassen die elektrischen und/oder elektronischen Mittel, dass der elektromechanische Aktuator einen einfach gewickelten Elektromotor mit einer Motorwicklung umfasst und dass die erste und die zweite elektronische Steuer- und Regeleinheit jeweils eine Endstufe zur Bereitstellung von Phasenspannungen und eine Treiberstufe zur Ansteuerung der Endstufe umfassen, wobei die Endstufe der ersten elektronischen Steuer- und Regeleinheit und die Endstufe der zweiten elektronischen Steuer- und Regeleinheit mit der Motorwicklung eines einfach gewickelten Elektromotors verbunden sind und derart ausgeführt sind, dass ihre Ausgänge bei Ausfall der zugehörigen elektronischen Steuer- und Regeleinheit hochohmig sind. So kann die Motorwicklung des Elektromotors von einer beliebigen der beiden elektronischen Steuer- und Regeleinheiten angesteuert werden.

Besonders bevorzugt umfassen die erste und die zweite elektronische Steuer- und Regeleinheit jeweils einen Motorprozessor.

Besonders bevorzugt wird auch hierbei die erste elektronische Steuer- und Regeleinheit von einer ersten elektrischen Energieversorgung versorgt und die zweite elektronische Steuer- und Regeleinheit von einer zweiten, von der ersten Energieversorgung unabhängigen, elektrischen Energieversorgung versorgt.

Gemäß einer weiteren bevorzugten Ausführungsform des erfindungsgemäßen Bremsensteuergerät umfassen die elektrischen und/oder elektronischen Mittel, dass der elektromechanische Aktuator einen einfach gewickelten Elektromotor mit einer Motorwicklung umfasst, dass die erste und die zweite elektronische Steuer- und Regeleinheit jeweils einen Motorprozessor umfassen, dass eine dritte elektronische Steuer- und Regeleinheit vorgesehen ist, welche eine erste und eine zweite Endstufe zur Bereitstellung von Phasenspannungen, eine erste und eine zweite Treiberstufen und Relais umfasst, wobei die Relais derart ausgeführt sind, dass jeder Motorprozessor seine Ausgangssignale an jede der zwei Treiberstufen übermitteln kann und jede Treiberstufe jede Endstufe ansteuern kann, und dass die erste und die zweite Endstufe mit der Motorwicklung des einfach gewickelten Elektromotors verbunden sind.

Besonders bevorzugt wird die erste elektronische Steuer- und Regeleinheit von einer ersten elektrischen Energieversorgung versorgt, die zweite elektronische Steuer- und Regeleinheiten wird von einer zweiten, von der ersten Energieversorgung unabhängigen, elektrischen Energieversorgung versorgt und die dritte elektronische Steuer- und Regeleinheiten kann umschaltbar von der ersten oder der zweiten Energieversorgung versorgt werden.

Gemäß einer weiteren bevorzugten Ausführungsform des erfindungsgemäßen Bremsensteuergerät umfassen die elektrischen und/oder elektronischen Mittel, dass der elektromechanische Aktuator einen ersten und einen zweiten Elektromotor mit jeweils einer Motorwicklung umfasst, wobei der erste und der zweite Elektromotor den Kolben der Druckquelle jeweils alleine oder gemeinsam vor- und zurückschieben können, dass die erste elektronische Steuer- und Regeleinheit eine erste Endstufe zur Bereitstellung von Phasenspannungen und eine erste Treiberstufe zur Ansteuerung der ersten Endstufe umfasst, wobei die erste Endstufe mit der Motorwicklung des ersten Elektromotors verbunden ist, und dass die zweite elektronische Steuer- und Regeleinheit eine zweite Endstufe zur Bereitstellung von Phasenspannungen und eine zweite Treiberstufe zur Ansteuerung der zweiten Endstufe umfasst, wobei die zweite Endstufe mit der Motorwicklung des zweiten Elektromotors verbunden ist.

Besonders bevorzugt umfassen die erste und die zweite elektronische Steuer- und Regeleinheit jeweils einen Motorprozessor.

Besonders bevorzugt wird die erste elektronische Steuer- und Regeleinheit von einer ersten elektrischen Energieversorgung und die zweite elektronische Steuer- und Regeleinheit wird von einer zweiten, von der ersten Energieversorgung unabhängigen, elektrischen Energieversorgung versorgt.

Bevorzugt werden das Druckzuschaltventil und zumindest die Einlass- und Auslassventile für zwei der Radbremsen von der ersten elektronischen Steuer- und Regeleinheit betätigt. Besonders bevorzugt werden das erste Druckzuschaltventil und zumindest die Einlass- und Auslassventile der ersten Ausgangsanschlüsse von der ersten elektronischen Steuer- und Regeleinheit betätigt.

Die erste elektronische Steuer- und Regeleinheit und die zweite elektronische Steuer- und Regeleinheit sind bevorzugt getrennt ausgeführt und über redundante Signalleitungen miteinander verbunden.

Die erste elektronische Steuer- und Regeleinheit und die zweite elektronische Steuer- und Regeleinheit sind bevorzugt voneinander elektrisch unabhängig in dem Sinne, dass ein Ausfall der ersten elektronischen Steuer- und Regeleinheit keinen Ausfall der zweiten elektronischen Steuer- und Regeleinheit bewirkt und umgekehrt.

Bevorzugt ist die Druckquelle einkreisig ausgeführt. Besonders bevorzugt umfasst die Druckquelle lediglich einen Druckraum.

Der Druckraum ist über ein erstes elektrisch betätigbares Druckzuschaltventil mit dem Bremsleitungsabschnitt verbunden, an welchen die Einlassventile angeschlossen sind. Bevorzugt ist jedes der Einlassventile ohne Zwischenschaltung eines weiteren elektrisch betätigbaren Ventils mit dem ersten Druckzuschaltventil verbunden. Besonders bevorzugt ist jedes der Einlassventile direkt, d.h. ohne Zwischenschaltung eines Ventils, mit dem ersten Druckzuschaltventil verbunden.

Anders ausgedrückt ist in dem Bremsleitungsabschnitt zwischen dem ersten elektrisch betätigbaren Druckzuschaltventil und jedem der Einlassventile bevorzugt kein elektrisch betätigbares Ventil, besonders bevorzugt kein Ventil, angeordnet.

Bevorzugt wird jedes Ventil des Bremsensteuergeräts, z.B. die Einlassventile und/oder die Auslassventile und/oder das oder die Druckzuschaltventil(e) und/oder das oder die Trennventil(e), von lediglich bzw. ausschließlich einer der beiden elektronischen Steuer- und Regeleinheiten betätigt.

Bevorzugt wird die erste Motorwicklung ausschließlich von der ersten elektronischen Steuer- und Regeleinheit und die zweite Motorwicklung ausschließlich von der zweiten elektronischen Steuer- und Regeleinheit angesteuert.

Gemäß einer Weiterbildung der Erfindung sind an den, den Radbremsen der zweiten Ausgangsanschlüsse zugeordneten Rädern elektrische betätigbare Parkbremsen vorgesehen.

Bevorzugt werden die elektrisch betätigbaren Parkbremsen von der ersten elektronischen Steuer- und Regeleinheit betätigt, um bei Ausfall der zweiten Steuer- und Regeleinheit die entsprechenden Radbremsen, vorteilhafterweise der Hinterräder, rein elektrisch dynamisch bremsen zu können.

Bevorzugt ist jedes der Einlassventile analog ansteuerbar und stromlos offen ausgeführt. Besonders bevorzugt ist jedem Einlassventil ein in Richtung des zugeordneten Ausgangsanschlusses schließendes Rückschlagventil parallelgeschaltet.

Bevorzugt ist jedes der Auslassventile stromlos geschlossen ausgeführt. Die Auslassventile sind besonders bevorzugt als Schaltventile ausgeführt.

Bevorzugt werden das erste Druckzuschaltventil und zumindest die Einlass- und Auslassventile der ersten Ausgangsanschlüsse lediglich bzw. ausschließlich von der ersten elektronischen Steuer- und Regeleinheit betätigt.

Bevorzugt sind die ersten Ausgangsanschlüsse den Radbremsen einer Achse des Fahrzeugs und die zweiten Ausgangsanschlüsse den Radbremsen der anderen Achse des Fahrzeugs zugeordnet. Besonders bevorzugt sind die ersten Ausgangsanschlüsse den Radbremsen der Vorderachse und die zweiten Ausgangsanschlüsse den Radbremsen der Hinterachse des Fahrzeugs zugeordnet.

Bevorzugt ist zur Druckregelung durch die erste Steuer- und Regeleinheit ein erster Drucksensor an den Bremsleitungsabschnitt angeschlossen, wobei die Signale des ersten Drucksensors der ersten elektronischen Steuer- und Regeleinheit zugeführt und von dieser ausgewertet werden.

Bevorzugt ist an den Bremsleitungsabschnitt ein zweiter Drucksensor angeschlossen, wobei die Signale des zweiten Drucksensors der zweiten elektronischen Steuer- und Regeleinheit zugeführt und von dieser ausgewertet werden. So ist eine präzise Druckregelung auch durch die zweite elektronische Steuer- und Regeleinheit möglich.

Bevorzugt ist das erste elektrisch betätigbare Druckzuschaltventil stromlos geschlossen ausgeführt und der Druckraum ist zusätzlich über ein zweites elektrisch betätigbares, stromlos geschlossen ausgeführtes Druckzuschaltventil mit dem Bremsleitungsabschnitt verbunden, welches, insbesondere ausschließlich, von der zweiten elektronischen Steuer- und Regeleinheit betätigt wird. Der Druckraum ist somit über eine Parallelschaltung von erstem und zweitem, stromlos geschlossenem Druckzuschaltventil mit dem Bremsleitungsabschnitt hydraulisch verbunden. Jede der zwei Steuer- und Regeleinheiten kann den Druckraum mit dem Bremsleitungsabschnitt und umgekehrt verbinden.

Alternativ ist es bevorzugt, dass das erste elektrisch betätigbare Druckzuschaltventil stromlos offen ausgeführt ist. Das erste Druckzuschaltventil wird vorteilhafterweise, insbesondere ausschließlich, von der ersten elektronischen Steuer- und Regeleinheit betätigt. Um den Durchfluss zu erhöhen, ist der Druckraum besonders bevorzugt über ein in Richtung der Einlassventile öffnendes Rückschlagventil mit dem Bremsleitungsabschnitt verbunden. Anders ausgedrückt, besonders bevorzugt ist dem ersten elektrisch betätigbaren Druckzuschaltventil ein in Richtung der Einlassventile bzw. der Ausgangsanschlüsse öffnendes Rückschlagventil parallelgeschaltet. Der Druckraum ist somit über eine Parallelschaltung von erstem, stromlos offenem Druckzuschaltventil und Rückschlagventil mit dem Bremsleitungsabschnitt hydraulisch verbunden. Nur die erste Steuer- und Regeleinheit kann den Bremsleitungsabschnitt mit dem Druckraum verbinden bzw. vom Druckraum trennen.

Bevorzugt umfasst das Bremsensteuergerät keine weitere hydraulische Druckquelle, insbesondere keine weitere elektrisch ansteuerbare hydraulische Druckquelle.

Die Einlass- und Auslassventile der zweiten Ausgangsanschlüsse werden bevorzugt, besonders bevorzugt ausschließlich, von der ersten elektronischen Steuer- und Regeleinheit betätigt, wobei der Bremsleitungsabschnitt über eine Trennventilvorrichtung mit zumindest einem ersten elektrisch betätigbaren Trennventil mit dem Druckmittelvorratsbehälter verbunden ist, wobei das erste Trennventil, besonders bevorzugt ausschließlich, von der zweiten elektronischen Steuer- und Regeleinheit betätigt wird.

Bevorzugt ist das erste Trennventil stromlos geschlossen ausgeführt und die Trennventilvorrichtung umfasst nur das erste elektrisch betätigbare Trennventil. So ist ein Druckausgleich außerhalb von Bremsungen mit nur einem Ventil möglich. Besonders bevorzugt ist einem der Auslassventile der zweiten Ausgangsanschlüsse ein in Richtung des Ausgangsanschlusses öffnendes Rückschlagventil parallelgeschaltet, um im stromlosen Zustand einen Unterdruck im System zu vermeiden.

Alternativ umfasst die Trennventilvorrichtung bevorzugt das erste elektrisch betätigbare Trennventil und ein diesem vor- oder nachgeschaltetes, zweites elektrisch betätigbares Trennventil, wobei das zweite Trennventil von der ersten elektronischen Steuer- und Regeleinheit betätigt wird. Das erste und das zweite Trennventil sind stromlos offen ausgeführt.

Bevorzugt werden die Einlass- und Auslassventile der zweiten Ausgangsanschlüsse, besonders bevorzugt ausschließlich, von der zweiten elektronischen Steuer- und Regeleinheit betätigt. Dabei ist keine hydraulische Verbindung des Bremsleitungsabschnitts über eine Trennventilvorrichtung mit dem Druckmittelvorratsbehälter vorgesehen. Bei einem Ausfall einer der Steuer- und Regeleinheiten ist eine radindividuelle Druckmodulation an zwei der Radbremsen weiterhin möglich. Besonders bevorzugt ist daher an den Bremsleitungsabschnitt ein zweiter Drucksensor angeschlossen, wobei die Signale des zweiten Drucksensors der zweiten elektronischen Steuer- und Regeleinheit zugeführt und von dieser ausgewertet werden. Besonders bevorzugt ist einem der Auslassventile der zweiten Ausgangsanschlüsse ein in Richtung des Ausgangsanschlusses öffnendes Rückschlagventil parallelgeschaltet, um im stromlosen Zustand einen Unterdruck im System zu vermeiden.

Gemäß einer Weiterbildung der Erfindung sind die Auslassventile der zweiten Ausgangsanschlüsse stromlos offen ausgeführt. Die Auslassventile der zweiten Ausgangsanschlüsse sind (zusätzlich) besonders bevorzugt analog ansteuerbar ausgeführt. Die Auslassventile der ersten Ausgangsanschlüsse sind besonders bevorzugt als Schaltventile und stromlos offen ausgeführt. Dabei ist keine hydraulische Verbindung des Bremsleitungsabschnitts über eine Trennventilvorrichtung mit dem Druckmittelvorratsbehälter vorgesehen.

Gemäß einer bevorzugten Ausführungsform der Weiterbildung werden die Einlassventile der zweiten Ausgangsanschlüsse, insbesondere ausschließlich, von der ersten elektronischen Steuer- und Regeleinheit betätigt und die Auslassventile der zweiten Ausgangsanschlüsse werden, insbesondere ausschließlich, von der zweiten elektronischen Steuer- und Regeleinheit betätigt. Besonders bevorzugt sind an den Rädern, welche den zweiten Ausgangsanschlüssen zugeordnet sind, elektrische betätigbare Parkbremsen vorgesehen, welche, insbesondere ausschließlich, von der ersten elektronischen Steuer- und Regeleinheit betätigt werden.

Gemäß einer anderen bevorzugten Ausführungsform der Weiterbildung wird für den einen zweiten Ausgangsanschluss das Einlassventil, insbesondere ausschließlich, von der ersten elektronischen Steuer- und Regeleinheit betätigt und das Auslassventil, insbesondere ausschließlich, von der zweiten elektronischen Steuer- und Regeleinheit betätigt, wobei für den anderen zweiten Ausgangsanschluss das Einlassventil, insbesondere ausschließlich, von der zweiten elektronischen Steuer- und Regeleinheit betätigt wird und das Auslassventil, insbesondere ausschließlich, von der ersten elektronischen Steuer- und Regeleinheit betätigt wird. Besonders bevorzugt ist an dem Rad, welches dem einen zweiten Ausgangsanschluss zugeordnet ist, eine erste elektrische betätigbare Parkbremse vorgesehen, welche von der ersten elektronischen Steuer- und Regeleinheit betätigt wird, während an dem Rad, welches dem anderen zweiten Ausgangsanschluss zugeordnet ist, eine zweite elektrische betätigbare Parkbremse vorgesehen ist, welche von der zweiten elektronischen Steuer- und Regeleinheit betätigt wird. Nach Ausfall einer Steuer- und Regeleinheit können so jeweils die beiden Räder der ersten Ausgangsanschlüsse und eines der Räder der zweiten Ausgangsanschlüsse hydraulisch gebremst werden. Das andere Rad der zweiten Ausgangsanschlüsse wird mittels der Parkbremse gebremst.

Gemäß einer bevorzugten Ausführungsform des Bremsensteuergeräts ist der Druckraum (30) über lediglich das eine erste elektrisch betätigbare Druckzuschaltventil (19) mit dem Bremsleitungsabschnitt (60) verbunden, wobei das erste elektrisch betätigbare Druckzuschaltventil (19) stromlos offen ausgeführt ist und wobei dem ersten elektrisch betätigbaren Druckzuschaltventil (19) ein in Richtung der Einlassventile (6a-6d) öffnendes Rückschlagventil (20) parallelgeschaltet ist.

Besonders bevorzugt sind die zumindest vier Einlassventile (6a-6d) stromlos offen ausgeführt und werden von der ersten elektronischen Steuer- und Regeleinheit (A) betätigt, wobei die Auslassventile (7a, 7b) der ersten Ausgangsanschlüsse (4a, 4b) stromlos geschlossen ausgeführt sind und von der ersten elektronischen Steuer- und Regeleinheit (A) betätigt werden und wobei die Auslassventile (7c, 7d) der zweiten Ausgangsanschlüsse (4c, 4d) stromlos offen ausgeführt sind, wobei zumindest eines der Auslassventile (7c; 7c, 7d) der zweiten Ausgangsanschlüsse (4c; 4c, 4d) (oder auch beide Auslassventile (7c; 7c, 7d)) von der zweiten elektronischen Steuer- und Regeleinheit (B) betätigt wird.

Ganz besonders bevorzugt wird oder werden die elektrisch betätigbare Parkbremse (50a) oder betätigbaren Parkbremsen (50a, 50b) von der ersten elektronischen Steuer- und Regeleinheit (A) betätigt, welche demjenigen zweiten Ausgangsanschluss (4c) oder denjenigen zweiten Ausgangsanschlüssen (4c, 4d) zugeordnet ist oder sind, dessen Auslassventil(e) (7c, 7d) von der zweiten elektronischen Steuer- und Regeleinheit (B) betätigten wird/werden. Das andere Auslassventil (7d) der zweiten Ausgangsanschlüsse (4d) kann von der ersten elektronischen Steuer- und Regeleinheit (A) betätigt werden, wobei die elektrisch betätigbare Parkbremse (50b), welche demjenigen zweiten Ausgangsanschluss (4d) zugeordnet ist, dessen Auslassventil (7d) von der ersten elektronischen Steuer- und Regeleinheit (A) betätigten wird, von der zweiten elektronischen Steuer- und Regeleinheit (B) betätigt.

Bevorzugt ist der Druckraum der Druckquelle über eine hydraulische Verbindung, in welcher ein in Richtung des Druckraums öffnendes Rückschlagventil angeordnet ist, mit dem Druckmittelvorratsbehälter verbunden.

Bevorzugt umfasst die Druckquelle kein Schnüffelloch bzw. keine Anbindung an den Druckmittelvorratsbehälter über ein Schnüffelloch.

Die Erfindung betrifft auch ein Bremssystem mit einer Betätigungseinheit für einen Fahrzeugführer und einem erfindungsgemäßen elektrohydraulischen Bremsensteuergerät. Dabei ist die Betätigungseinheit mit dem Bremsensteuergerät durch eine Übermittlung eines Fahrerwunschsignals verbunden. Eine mechanisch-hydraulische Verbindung von der Betätigungseinheit zu dem Bremsensteuergerät besteht nicht (keine hydraulische Rückfallebene).

Weitere bevorzugte Ausführungsformen der Erfindung ergeben sich aus den Unteransprüchen und der nachfolgenden Beschreibung anhand von Figuren.

Es zeigen schematisch
- Fig. 1: ein erstes Ausführungsbeispiel eines erfindungsgemäßen Bremsensteuergeräts,
- Fig. 2: ein zweites Ausführungsbeispiel eines erfindungsgemäßen Bremsensteuergeräts,
- Fig. 3: ein drittes Ausführungsbeispiel eines erfindungsgemäßen Bremsensteuergeräts,
- Fig. 4: ein viertes Ausführungsbeispiel eines erfindungsgemäßen Bremsensteuergeräts,
- Fig. 5: ein fünftes Ausführungsbeispiel eines erfindungsgemäßen Bremsensteuergeräts, und
- Fig. 6: ein sechstes Ausführungsbeispiel eines erfindungsgemäßen Bremsensteuergeräts.

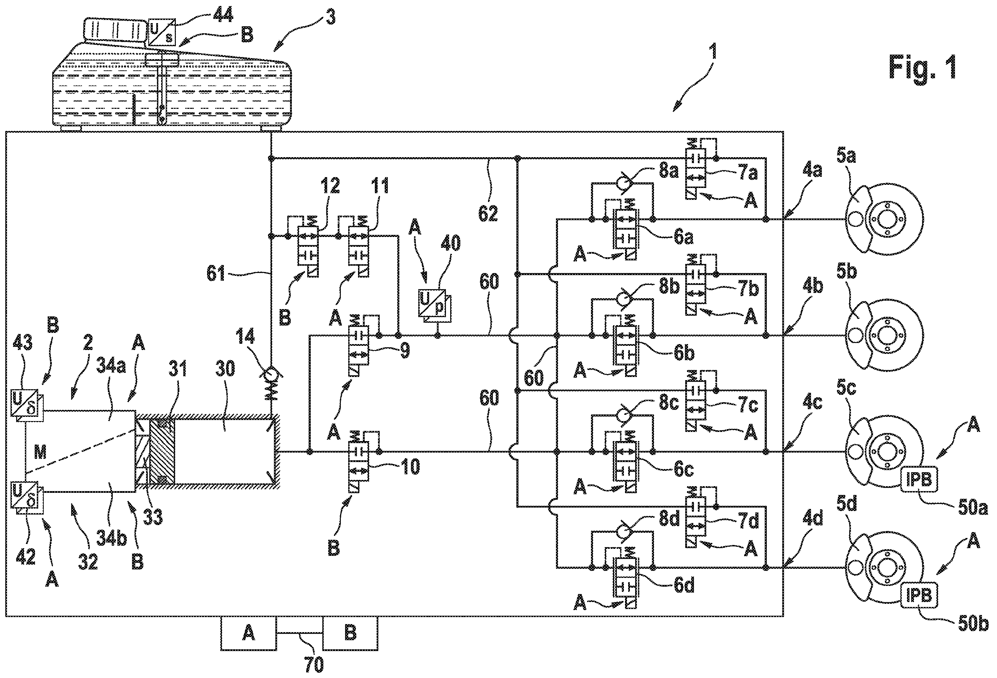

**In** Fig. 1 ist ein erstes Ausführungsbeispiel eines erfindungsgemäßen Bremsensteuergeräts 1 für ein Kraftfahrzeug mit vier hydraulisch betätigbaren Radbremsen 5a-5d schematisch dargestellt.

Bremsensteuergerät 1 umfasst einen nicht näher bezeichneten Ventilblock (hydraulische Steuer- und Regeleinheit) mit einem Ausgangsanschluss 4a-4d für jede Radbremsen 5a-5d. An dem Ventilblock ist ein unter Atmosphärendruck stehender Druckmittelvorratsbehälter 3 angeordnet. Beispielsgemäß sind die (ersten) Ausgangsanschlüsse 4a, 4b den Radbremsen 5a, 5b der Vorderachse (Front) zugeordnet und die (zweiten) Ausgangsanschlüsse 4c, 4d den Radbremsen 5c, 5d der Hinterachse (Rear) zugeordnet.

Der Füllstand des Druckmittelvorratsbehälters 3 wird mittels eines Füllstandsensors 44 gemessen.

Jedem Ausgangsanschluss 4a-4d ist eine Einlassventil 6a-6d sowie ein Auslassventil 7a-7d zugeordnet. Jedem Einlassventil 6a-6d ist ein in Richtung des zugeordneten Ausgangsanschlusses 4a-4d schließendes Rückschlagventil 8a-8d parallelgeschaltet. Über das Auslassventil 7a-7d ist der jeweilige Ausgangsanschluss 4a-4d mit dem Druckmittelvorratsbehälter 3 verbunden. Die Einlassventile 6a-6d sind beispielsgemäß stromlos offen und analog ansteuerbar ausgeführt, die Auslassventile 7a-7d sind als stromlos geschlossene Schaltventile ausgeführt.

Beispielsgemäß sind die Auslassventile 7a-7d über eine gemeinsame Rücklaufleitung 62 an den Druckmittelvorratsbehälter 3 angeschlossen.

Es ist eine elektrisch ansteuerbare hydraulische Druckquelle 2 vorgesehen, welche durch eine Zylinder-Kolben-Anordnung mit einem Druckraum 30 gebildet wird, deren Kolben 31 durch einen elektromechanischen Aktuator mit einem schematisch angedeuteten Elektromotor 32 und einem schematisch dargestellten Rotations-Translationsgetriebe
33 betätigbar ist. Druckquelle 2 ist beispielsgemäß als ein einkreisiger elektrohydraulischer Linearaktuator (LAC) mit nur einem Druckraum 30 ausgebildet. Kolben 31 kann mittels des elektromechanischen Aktuators zum Aufbau eines Druckes vorgeschoben (Bremsbetätigungsrichtung) und zum Abbau eines Druckes zurückgeschoben bzw. zurückgezogen werden. Dabei ist der Elektromotor als ein doppelt gewickelter Elektromotor 32 mit einer ersten Motorwicklung 34a und einer zweiten Motorwicklung 34b ausgebildet. Werden beide Motorwicklungen 34a, 34b angesteuert, liefert Elektromotor 32 die volle Leistung. Im Falle, dass nur eine der beiden Motorwicklungen 34a, 34b angesteuert wird, ist die Leistung des Elektromotors 32 zwar reduziert, es kann aber dennoch Druck mittels der Druckquelle 2 aufgebaut werden, wenn auch in verminderter Höhe und mit verminderter Dynamik.

Bremsensteuergerät 1 umfasst beispielsgemäß nur die eine hydraulische Druckquelle 2.

Zur Ansteuerung der Druckquelle 2 ist zumindest ein erster Motorwinkelsensor 43 vorgesehen. Beispielsgemäß ist zusätzlich ein zweiter Motorwinkelsensor 42 vorgesehen.

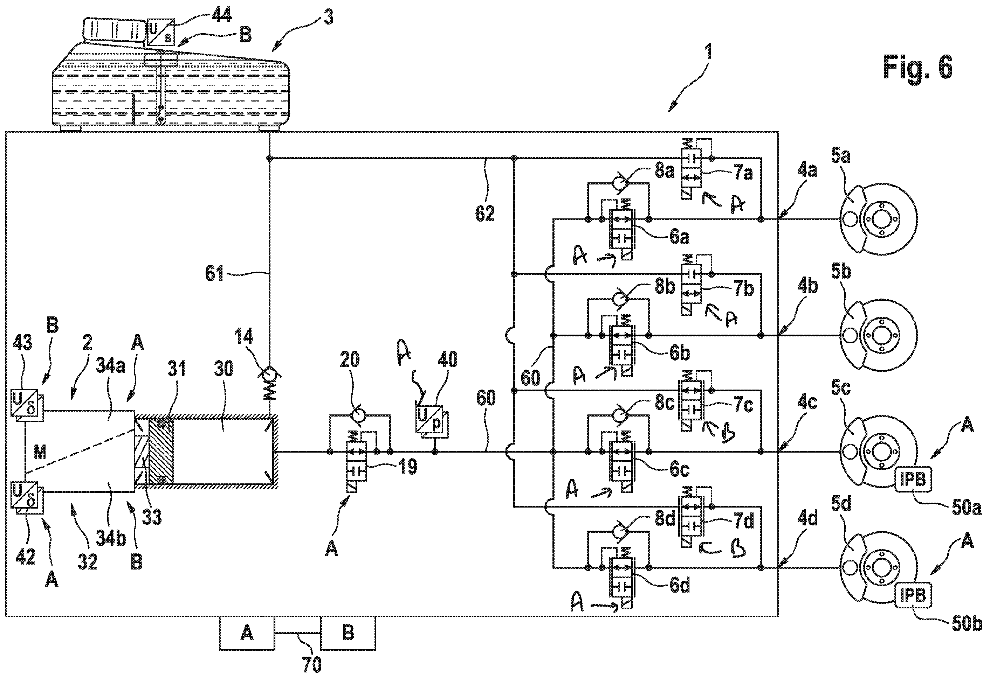

Druckraum 30 ist über ein (erstes) elektrisch betätigbares Druckzuschaltventil 9 mit einem Bremsleitungsabschnitt 60 hydraulisch verbunden. An den Bremsleitungsabschnitt 60 sind die Einlassventile 6a-6d angeschlossen. Bremsleitungsabschnitt 60 verbindet somit den Ausgangsanschluss des ersten Druckzuschaltventils 9 (bzw. 19 in Fig. 6) mit jedem der Eingangsanschlüsse der Einlassventile 6a-6d. Druckraum 30 ist mit dem Eingangsanschluss des ersten Druckzuschaltventils 9 (bzw. 19 in Fig. 6) verbunden. Der Ausgangsanschluss jedes Einlassventils 6a-6d ist mit dem zugeordneten Ausgangsanschluss 4a-4d des Bremsensteuergeräts 1 für die Radbremsen 5a-5d verbunden.

Beispielsgemäß ist Druckraum 30 über ein weiteres elektrisch betätigbares (zweites) Druckzuschaltventil 10 mit dem Bremsleitungsabschnitt 60 verbunden. Anders ausgedrückt, Druckraum 30 ist über zwei, zueinander parallel geschaltete Druckzuschaltventile 9, 10 mit dem Bremsleitungsabschnitt 60 hydraulisch verbunden. Dabei sind die Druckzuschaltventile 9, 10 stromlos geschlossen ausgeführt.

Die Funktion der Druckzuschaltventile 9, 10 ist es, nach einer volumenverbrauchenden Druckmodulation (d.h. mit Ablassen von Druckmittel über die Auslassventile in den Druckmittelvorratsbehälter 3) zu ermöglichen, dass der Linearaktuator 2 Druckmittel nachsaugt.

Gemäß eines nicht dargestellten Ausführungsbeispiels ist der Druckraum 30 über ein (einziges) elektrisch betätigbares, stromlos offenes Druckzuschaltventil mit einem parallel geschalteten, in Richtung der Einlassventile 6a-6d öffnenden Rückschlagventil mit dem Bremsleitungsabschnitt 60 verbunden (entsprechend wie in Fig. 6 dargestellt: erstes, stromlos offenes Druckzuschaltventil 19 mit parallel geschaltetem Rückschlagventil 20).

In den hydraulischen Verbindungen von dem Druckraum 30 zu jedem der Einlassventile 6a-6d ist jeweils nur genau ein Ventil angeordnet, nämlich eines der Druckzuschaltventile 9 oder 10 (Ausführungsbeispiel der Fig. 1) oder eines der Ventile 19 oder 20 (nicht dargestelltes Ausführungsbeispiel). Entsprechend ist in dem Bremsleitungsabschnitt 60 zwischen dem ersten Druckzuschaltventil (9 oder 19) und jedem der Einlassventile 6a-6d kein elektrisch betätigbares Ventil, insbesondere kein Ventil, angeordnet. Entsprechendes gilt für das zweite Druckzuschaltventil 10 und jedes der Einlassventile 6a-6d. D.h. das bzw. die Druckzuschaltventile 9, 10 sind direkt, ohne Zwischenschaltung eines Ventils mit allen Einlassventilen 6a-6d verbunden.

An den Bremsleitungsabschnitt 60 ist ein (erster) Drucksensor 40 angeschlossen, mittels welchem der von der Druckquelle 2 erzeugte Druck bestimmt werden kann.

Zum Nachsaugen von Druckmittel in die Druckquelle 2, ist der Druckraum 30 der Druckquelle 2 über eine hydraulische Verbindung 61, in welcher ein in Richtung des Druckraums 30 öffnendes Rückschlagventil 14 angeordnet ist, mit dem Druckmittelvorratsbehälter 3 verbunden.

Beispielsgemäß werden die Rücklaufleitung 62 und die hydraulische Verbindung 61 über einen zumindest teilweise gemeinsamen Leitungsabschnitt gebildet.

Bremsleitungsabschnitt 60 ist beispielsgemäß über eine Trennventilvorrichtung aus zwei hintereinander geschalteten, elektrisch betätigbaren Trennventilen 11, 12 mit dem Druckmittelvorratsbehälter 3 verbunden. Dabei sind die hintereinander geschalteten Trennventile 11, 12 beispielsgemäß zwischen dem Bremsleitungsabschnitt 60 und der hydraulischen (Nachsaug)Verbindung 61 angeordnet. Die beiden stromlos offenen Trennventile 11, 12 dienen der Funktion eines Druckausgleichs außerhalb von Bremsungen.

An den Rädern einer der Achsen, beispielsgemäß an der Hinterachse (Rear), sind elektrische Parkbremsen 50a, 50b vorgesehen. Die elektrischen Parkbremsen 50a, 50b werden von dem Bremsensteuergerät 1 angesteuert bzw. betätigt. Vorteilhafterweise sind die Radbremsen der Hinterachse als Kombibremssättel mit einer hydraulischen Radbremse 5c, 5d und einer integrierten, elektrisch betätigbaren Parkbremse (IPB) ausgeführt.

Bremsensteuergerät 1 umfasst weiterhin eine erste elektronische Steuer- und Regeleinheit A und eine getrennte, zweite elektronische Steuer- und Regeleinheit B zur Ansteuerung der elektrisch betätigbaren Komponenten des Bremsensteuergeräts 1 sowie der Parkbremsen 50a, 50b. Die Steuer- und Regeleinheiten A und B sind über redundante Signalleitungen 70 miteinander verbunden.

Die Pfeile A oder B an den elektrischen oder elektrisch betätigbaren Komponenten, wie Ventilen und Sensoren, kennzeichnen die Zuordnung zur elektronischen Steuer- und Regeleinheit A oder B.

Der Elektromotor 32 der Druckquelle 2 wird von der ersten und der zweiten elektronischen Steuer- und Regeleinheit angesteuert in dem Sinne, dass die erste Motorwicklung 34a (nur) von der ersten elektronischen Steuer- und Regeleinheit A (mit Pfeil mit A gekennzeichnet) und die zweite Motorwicklung 34b (nur) von der zweiten elektronischen Steuer- und Regeleinheit B (mit Pfeil mit B gekennzeichnet) angesteuert wird.

Die Ventile 6, 7, 9-12 und Sensoren 40, 42, 43, 44 des Bremsensteuergeräts 1 sind jeweils nur einer der elektronischen Steuer- und Regeleinheiten zugeordnet, d.h. werden ausschließlich von der elektronischen Steuer- und Regeleinheit A oder ausschließlich von der elektronischen Steuer- und Regeleinheit B angesteuert. Hierdurch werden aufwändige, doppelt ansteuerbare Ventile/Ventilspulen vermieden.

Gemäß dem ersten Ausführungsbeispiel werden die Einlass- und Auslassventile 6a-6d, 7a-7d, das (erste) Druckzuschaltventil 9 und das Trennventil 11 von der ersten elektronischen Steuer- und Regeleinheit A betätigt. Ebenso werden die zwei elektrischen Parkbremsen 50a, 50b von der ersten elektronischen Steuer- und Regeleinheit A betätigt. Dies ist durch die Pfeile mit A gekennzeichnet.

Das (zweite) Druckzuschaltventil 10 und das Trennventil 12 werden von der zweiten elektronischen Steuer- und Regeleinheit B betätigt (dies ist durch die Pfeile mit B gekennzeichnet).

Die Signale des (ersten) Motorwinkelsensors 43 werden der zweiten elektronischen Steuer- und Regeleinheit B zugeführt und von dieser ausgewertet, wohingegen die Signale des (zweiten) Motorwinkelsensors 42 der ersten elektronischen Steuer- und Regeleinheit A zugeführt und von dieser ausgewertet werden.

Die Signale des (ersten) Drucksensors 40 werden beispielsgemäß der ersten elektronischen Steuer- und Regeleinheit A zugeführt und von dieser ausgewertet.

Da der Steuer- und Regeleinheit A anhand der Signale des Drucksensors 40 eine Information für den von der Druckquelle 2 erzeugten Druck vorliegt, kann ggf. auf den zweiten Motorwinkelsensor 42, welcher der Steuer- und Regeleinheit A zugeordnet ist, verzichtet werden.

Nach Ausfall einer der Steuer- und Regeleinheiten A oder B kann die Druckquelle 2 dennoch mittels einer der Motorwicklungen 34a oder 34b Druck aufbauen, wenn auch in verminderter Höhe und mit verminderter Dynamik. Mit diesem (Zentral)Druck werden alle vier Radbremsen 5a-5d beaufschlagt. Der (Zentral)Druck kann auch mittels vor- und zurückschieben des Kolbens 31 moduliert werden.

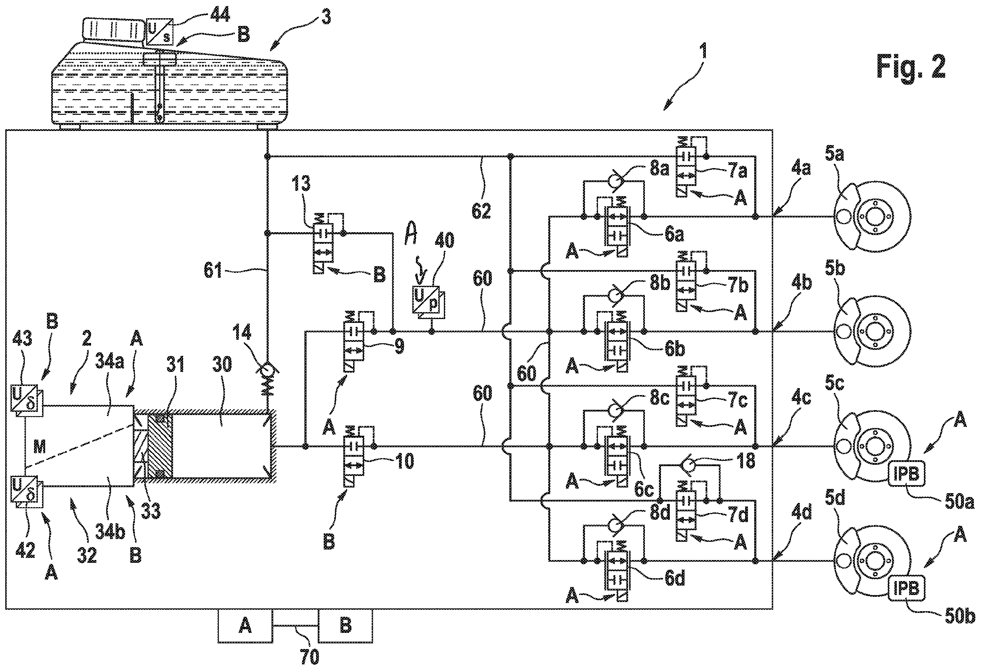

Ein möglicher Nachteil des ersten Ausführungsbeispiels sind die beiden Trennventile 11, 12, welche nur die Funktion eines Druckausgleichs außerhalb von Bremsungen haben. Zwei Ventile sind ein hoher Aufwand für diese Funktion. Gemäß den anderen Ausführungsbeispielen (siehe Fig. 2-5 und deren Beschreibung) wird die Druckausgleichsfunktion vorteilhafterweise von anderen Ventilen mit übernommen.

In Fig. 2 ist ein zweites Ausführungsbeispiel eines erfindungsgemäßen Bremsensteuergeräts 1 für ein Kraftfahrzeug schematisch dargestellt. Die einzigen Unterschiede zu dem ersten Ausführungsbeispiel liegen in einer anderen Trennventilvorrichtung und einem zusätzlichen Rückschlagventil 18. Die beiden hintereinandergeschalteten stromlos offenen Trennventile 11, 12 werden durch ein einziges (erstes) Trennventil 13 ersetzt, welches stromlos geschlossen ausgeführt ist und von der zweiten elektronischen Steuer- und Regeleinheit B betätigt wird. Weiterhin ist einem der Auslassventile, beispielsgemäß dem Auslassventil 7d, ein in Richtung des Ausgangsanschlusses 4d öffnendes Rückschlagventil 18 parallelgeschaltet.

Das stromlos geschlossene Trennventil 13 wird außerhalb von Bremsungen periodisch oder permanent geöffnet. Nach einem Ausfall der zweiten Steuer- und Regeleinheit B wird der Druckausgleich sichergestellt, indem mindestens ein Auslassventil 7a-7d außerhalb von Bremsungen periodisch oder permanent geöffnet wird. Vorteilhafterweise rotiert diese Funktion über die Auslassventile. Im stromlosen Zustand wird ein Unterdruck im System vermieden, da einem Auslassventil (7d) das Rückschlagventil 18 parallelgeschaltet ist. Überdruck im stromlosen Zustand durch thermische Ausdehnung der Bremsflüssigkeit muss hingenommen werden.

Auch bei dem zweiten Ausführungsbeispiel kann - anstelle der zwei parallelgeschalteten, stromlos geschlossenen Druckzuschaltventile 9, 10 - alternativ (nicht dargestellt) der Druckraum 30 über ein (einziges) elektrisch betätigbares, stromlos offenes Druckzuschaltventil mit einem parallel geschalteten, in Richtung der Einlassventile 6a-6d öffnenden Rückschlagventil mit dem Bremsleitungsabschnitt 60 verbunden sein (entsprechend wie in Fig. 6 dargestellt: erstes, stromlos offenes Druckzuschaltventil 19 mit parallel geschaltetem Rückschlagventil 20).

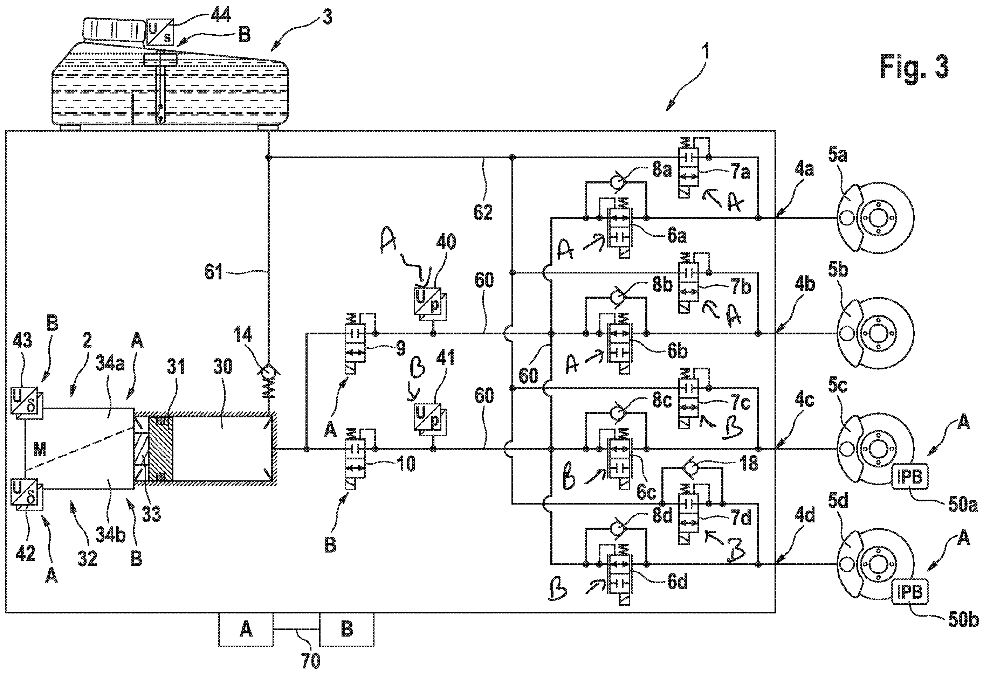

In Fig. 3 ist ein drittes Ausführungsbeispiel eines erfindungsgemäßen Bremsensteuergeräts 1 für ein Kraftfahrzeug schematisch dargestellt. Im Unterschied zum zweiten Ausführungsbeispiel entfällt auch die hydraulische Verbindung von dem Bremsleitungsabschnitt 60 zum Druckmittelvorratsbehälter 30 mit dem Trennventil 13. Außerdem werden die Einlass- und Auslassventile zweier Radbremsen, vorteilhafterweise die Einlass- und Auslassventile 6c, 6d, 7c, 7d, welche einer der Achsen (beispielsgemäß der Hinterachse (Rear)) zugeordnet sind, gemäß dem dritten Ausführungsbeispiel von der zweiten elektronischen Steuer- und Regeleinheit B betätigt. Auch in diesem Ausführungsbeispiel ist einem der Auslassventile, beispielsgemäß dem Auslassventil 7d, ein in Richtung des Ausgangsanschlusses 4d öffnendes Rückschlagventil 18 parallelgeschaltet. Die Einlass- und Auslassventile 6a, 6b, 7a, 7b der anderen Achse (beispielsgemäß der Vorderachse (Front)) werden, wie im zweiten Ausführungsbeispiel, von der ersten elektronischen Steuer- und Regeleinheit A betätigt.

An den Bremsleitungsabschnitt 60 ist beispielsgemäß ein zweiter Drucksensor 41 angeschlossen, mittels welchem der von der Druckquelle 2 erzeugte Druck bestimmt werden kann. Die Signale des zweiten Drucksensors 41 werden der anderen, d.h. der zweiten elektronischen Steuer- und Regeleinheit B zugeführt und von dieser ausgewertet. So liegen jeder Steuer- und Regeleinheit A und B die Signale eines der Drucksensoren 40, 41 vor.

Die Druckausgleichsfunktion außerhalb von Bremsungen wird ganz von den Auslassventilen 7a-7d übernommen, analog zu der Beschreibung zum zweiten Ausführungsbeispiel.

Da die Raddruckmodulationsventile (d.h. Einlass- und Auslassventile) achsweise den Steuer- und Regeleinheiten A und B zugeordnet sind, ist der Druckausgleich auch nach Ausfall einer der Steuer- und Regeleinheiten A oder B noch gewährleistet.

Die Druckregelfunktionen (zum Beispiel ABS (Antiblockierregelung)) werden auf beide Steuer- und Regeleinheiten verteilt und von beiden gemeinsam durchgeführt. Darin liegt ein gewisser Nachteil. Dafür ist bei Ausfall einer der Steuer- und Regeleinheiten A oder B eine radindividuelle Druckmodulation in einer Achse weiterhin möglich. Zu diesem Zweck sind auch die zwei Drucksensoren 40, 41 vorgesehen, wobei jeder einer der Steuer- und Regeleinheiten A oder B zugeordnet ist.

Auch bei dem dritten Ausführungsbeispiel kann - anstelle der zwei parallelgeschalteten, stromlos geschlossenen Druckzuschaltventile 9, 10 - alternativ (nicht dargestellt) der Druckraum 30 über ein (erstes) elektrisch betätigbares, stromlos offenes Druckzuschaltventil mit einem parallel geschalteten, in Richtung der Einlassventile 6a-6d öffnenden Rückschlagventil mit dem Bremsleitungsabschnitt 60 verbunden sein (entsprechend wie in Fig. 6 dargestellt).

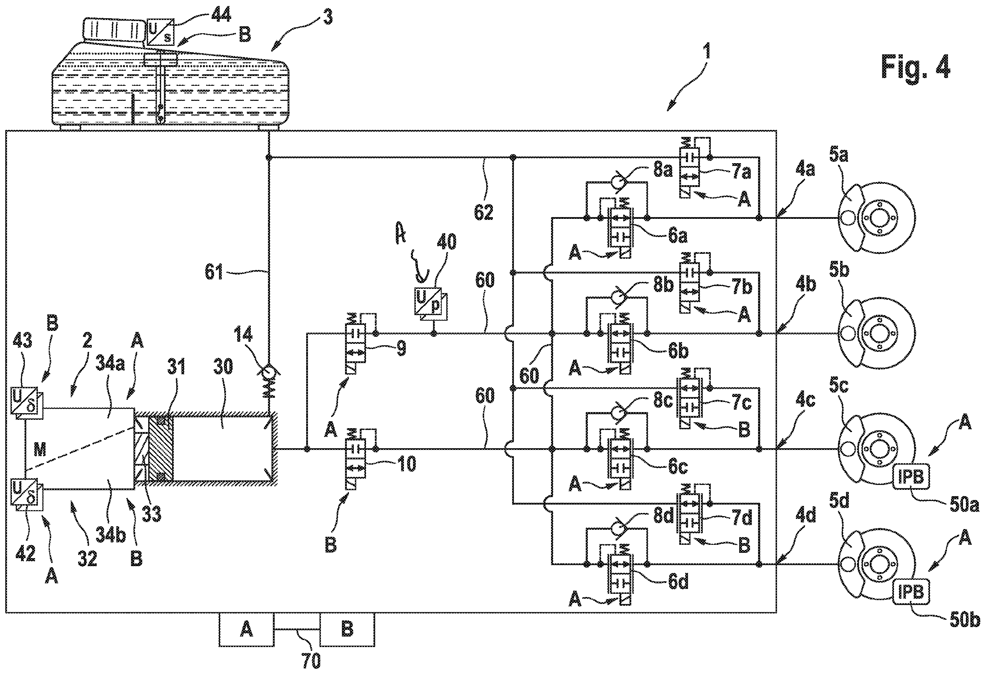

In Fig. 4 ist ein viertes Ausführungsbeispiel eines erfindungsgemäßen Bremsensteuergeräts 1 für ein Kraftfahrzeug schematisch dargestellt. Im Unterschied zum ersten Ausführungsbeispiel entfällt auch dabei die hydraulische Verbindung von dem Bremsleitungsabschnitt 60 zum Druckmittelvorratsbehälter 30 mit den Trennventilen 11, 12. Außerdem sind beispielsgemäß die Auslassventile 7c, 7d, welche der Hinterachse (Rear) zugeordnet sind, gemäß dem dritten Ausführungsbeispiel analog ansteuerbar und stromlos offen ausgeführt. Nur die Auslassventile 7c, 7d werden von der zweiten elektronischen Steuer- und Regeleinheit B betätigt, währen die übrigen Einlass- und Auslassventile 6a-6d, 7a, 7b von der ersten elektronischen Steuer- und Regeleinheit A betätigt werden. D.h. die Einlass- und Auslassventile 6a, 6b, 7a, 7b der ersten Ausgangsanschlüsse 4a, 4b sowie die Einlassventile 6c, 6d der zweiten Ausgangsanschlüsse 4c, 4d werden von der ersten elektronischen Steuer- und Regeleinheit A betätigt und die Auslassventile 7c, 7d der zweiten Ausgangsanschlüsse 4c, 4d werden von der zweiten elektronischen Steuer- und Regeleinheit B betätigt.

Nach Ausfall der ersten elektronischen Steuer- und Regeleinheit A können alle vier Räder hydraulisch gebremst werden, indem die zweite elektronische Steuer- und Regeleinheit B die stromlos offenen Auslassventile 7c, 7d schließt. Wenn der zweiten Steuer- und Regeleinheit B geeignete Fahrzeugsignale, insbesondere die Raddrehzahlen, zur Verfügung stehen, ist auch eine Zentraldruckmodulation zur Schlupfregelung möglich.

Nach Ausfall der zweiten Steuer- und Regeleinheit B werden die Einlassventile 6c, 6d der Hinterachse (Rear) für jede Bremsung geschlossen. Die Räder der Vorderachse (Front) werden hydraulisch gebremst (5a, 5b), die Räder der Hinterachse (Rear) werden durch die elektrischen Parkbremsen 50a, 50b gebremst. Eine radindividuelle Modulation bleibt möglich.

Dieses Ausführungsbeispiel hat den Vorteil, dass im stromlosen Zustand sowohl Unterdruck als auch Überdruck vermieden werden. Die Analogfunktion der Auslassventile 7c, 7d, die an stromlos offenen Ventilen wesentlich leichter zu realisieren ist als an stromlos geschlossenen Ventilen, erlaubt einen selektiven Komfort-Druckabbau an der Hinterachse ("Achs-Blending") und auch an jedem einzelnen Hinterrad, eine Funktion, die insbesondere im Rahmen von regenerativen Bremsungen erwünscht ist. Der Ventilstrombedarf während einer Bremsung ist erhöht, was aber voraussichtlich durch den geringeren Strombedarf außerhalb von Bremsungen mehr als ausgeglichen wird. Ein gewisser Nachteil kann darin gesehen werden, dass in diesem Konzept die Druckregelung jedes einzelnen Hinterrads auf beide Steuer- und Regeleinheiten A und B verteilt ist.

Wie in Fig. 6 schematisch dargestellt, kann auch bei dem vierten Ausführungsbeispiel - anstelle der zwei parallelgeschalteten, stromlos geschlossenen Druckzuschaltventile 9, 10 - der Druckraum 30 über ein (einziges) elektrisch betätigbares, stromlos offenes Druckzuschaltventil 19 mit einem parallel geschalteten, in Richtung der Einlassventile 6a-6d öffnenden Rückschlagventil 20 mit dem Bremsleitungsabschnitt 60 verbunden sein. Das Druckzuschaltventil 19 wird, wie das Druckzuschaltventil 9, von der ersten elektronischen Steuer- und Regeleinheit A betätigt.

Wie bereits oben im Zusammenhang mit dem ersten Ausführungsbeispiel erwähnt wurde, ist es die Funktion der Druckzuschaltventile 9, 10, nach einer volumenverbrauchenden Druckmodulation zu ermöglichen, dass die Druckquelle 2 nachsaugt. Nach Ausfall der ersten Steuer- und Regeleinheit A ist aber ohnehin keine volumenverbrauchende Druckmodulation vorgesehen. Entsprechend können die zwei parallelgeschalteten, stromlos geschlossenen, von verschiedenen Steuer- und Regeleinheiten betätigten Druckzuschaltventile 9, 10 durch ein einziges, stromlos offenes, von Steuer- und Regeleinheit A betätigtes Druckzuschaltventil 19 ersetzt werden.

Das stromlos offene Ventil 19 sollte vorteilhafterweise einen Strömungswiderstand ähnlich klein wie der eines heutigen stromlos geschlossenen Druckzuschaltventils besitzen. Dieses Problem wird beispielsgemäß dadurch gemildert, dass dem stromlos offenen Druckzuschaltventil 19 ein Rückschlagventil 20 in Druckaufbaurichtung parallelgeschaltet ist. Es ist auch vorteilhaft, mehrere parallele Rückschlagventile zu wählen. Ein kleiner Strömungswiderstand in Druckaufbaurichtung ist damit kostengünstig realisierbar. Wenn der Strömungswiderstand in Druckabbaurichtung zu groß ist, können schnelle Druckabbauten über die (gegebenenfalls analogen) Auslassventile durchgeführt werden. Ein zusätzlicher Vorteil des parallelgeschalteten Rückschlagventils 20 besteht in einer erhöhten Robustheit gegenüber einem fehlerbedingt geschlossenen Druckzuschaltventil.

Ein Vorteil des sechsten Ausführungsbeispiel der Fig. 6 besteht darin, dass außerhalb von Bremsungen kein Ventil bestromt werden muss.

Wie auch bei der Beschreibung der Figuren 1 bis 3 und 5 erwähnt, entstehen entsprechende alternative, nicht dargestellte Ausführungsbeispiele mit Ventil 19 (und ggf. 20) zu den ersten, zweiten, dritten und fünften Ausführungsbeispielen.

Zu dem alternativen dritten Ausführungsbeispiel (mit stromlos offenem Druckzuschaltventil 19 kombiniert mit vier stromlos geschlossenen Auslassventilen 7a-7d, die den Druckausgleich übernehmen (ohne Verbindung mit Trennventilvorrichtung zum Druckmittelvorratsbehälter)) sei noch bemerkt, dass nach Ausfall der Steuer- und Regeleinheit A noch die Raddruckmodulationsventile 6c, 6d, 7c, 7d (beispielsgemäß der Hinterachse (Rear)) zur Verfügung stehen, die Druckquelle 2 aber nicht mehr nachsaugen kann. Die angemessene Schlupfregelfunktion an der Hinterachse ist EBV (elektronische Bremskraftverteilung) ohne Volumenverbrauch.

Ein gewisser Nachteil des vierten Ausführungsbeispiel gegenüber den Ausführungsbeispielen mit vier stromlos geschlossenen Auslassventilen 7a-7d kann darin gesehen werden, dass die beiden Parkbremsen 50a, 50b nicht mehr ohne Funktionsverlust auf beide Steuer- und Regeleinheiten A und B verteilt werden können, was zum Beispiel erwünscht ist, um die Getriebe-Parksperre entfallen zu lassen. Wenn in dem vierten Ausführungsbeispiel alternativ (nur) eine der beiden Parkbremsen, z.B. die Parkbremse 50b, von der zweiten Steuer- und Regeleinheit B angesteuert würde, können nach einem Ausfall der zweiten Steuer- und Regeleinheit B nur noch die Vorderräder (5a, 5b) und das eine Hinterrad (50a), dessen Parkbremse der ersten Steuer- und Regeleinheit A zugeordnet ist, gebremst werden.

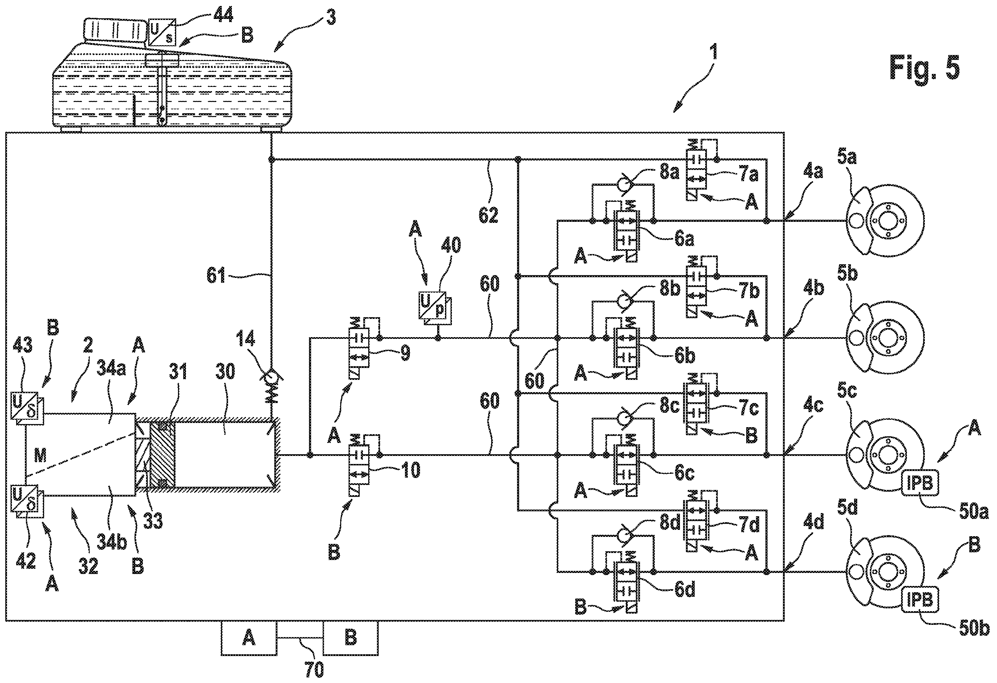

Dieser Nachteil wird durch das fünfte Ausführungsbeispiel eines erfindungsgemäßen Bremsensteuergeräts 1, wie es in Fig. 5 schematisch dargestellt ist, behoben. Wie im vierten Ausführungsbeispiel, sind die Auslassventile 7c, 7d, welche der Hinterachse (Rear) zugeordnet sind, analog ansteuerbar und stromlos offen ausgeführt. Im Unterschied zum vierten Ausführungsbeispiel wird für einen der zweiten Ausgangsanschlüsse 4c das Einlassventil 6c von der ersten elektronischen Steuer- und Regeleinheit A betätigt und das zugeordnete Auslassventil 7c von der zweiten elektronischen Steuer- und Regeleinheit B betätigt, während für den anderen zweiten Ausgangsanschluss 4d das Einlassventil 6d von der zweiten elektronischen Steuer- und Regeleinheit B und das zugeordnete Auslassventil 7d von der ersten elektronischen Steuer- und Regeleinheit A betätigt wird. Gleichzeitig wird die dem zweiten Ausgangsanschluss 4c zugeordnete elektrische betätigbare Parkbremse 50a von der ersten elektronischen Steuer- und Regeleinheit A betätigt, während die andere, dem zweiten Ausgangsanschluss 4d zugeordnete elektrische betätigbare Parkbremse 50b von der zweiten elektronischen Steuer- und Regeleinheit B betätigt wird.

Nach Ausfall einer Steuer- und Regeleinheit A oder B können jeweils beide Räder der Vorderachse und ein Rad der Hinterachse hydraulisch gebremst werden, das andere Rad der Hinterachse wird von der Parkbremse gebremst. Beispielsgemäß werden bei Ausfall der zweiten Steuer- und Regeleinheit B die Radbremsen 5a, 5b, 5d hydraulisch gebremst und die Parkbremse 50a gebremst; bei Ausfall der ersten Steuer- und Regeleinheit A werden die Radbremsen 5a, 5b, 5c hydraulisch gebremst und die Parkbremse 50b gebremst. Ein Nachteil besteht in der asymmetrischen Modulation der Hinterachse. Es könnte schwierig sein, an beiden Hinterrädern die gleichen Latenzzeiten in der Druckmodulation zu erreichen.

Auch bei dem fünften Ausführungsbeispiel kann - anstelle der zwei parallelgeschalteten, stromlos geschlossenen Druckzuschaltventile 9, 10 - alternativ (nicht dargestellt) der Druckraum 30 über ein (erstes) elektrisch betätigbares, stromlos offenes Druckzuschaltventil mit einem parallel geschalteten, in Richtung der Einlassventile 6a-6d öffnenden Rückschlagventil mit dem Bremsleitungsabschnitt 60 verbunden sein (entsprechend wie in Fig. 6 dargestellt). Bei jedem der Ausführungsbeispiele ist vorteilhafterweise ein zweiter Drucksensor 41 an den Bremsleitungsabschnitt 60 angeschlossen, wobei die Signale des zweiten Drucksensors 41 der zweiten elektronischen Steuer- und Regeleinheit B zugeführt und von dieser ausgewertet werden (wie für das Ausführungsbeispiel der Fig. 4 beschrieben).

Den bisher beschriebenen Ausführungsbeispielen ist gemeinsam, dass die Druckquelle 2 ein Linearaktuator mit einem doppelt gewickelten Elektromotor 32 ist, wobei jede Steuer- und Regeleinheit A oder B genau eine der beiden Motorwicklungen 34a oder 34b ansteuert. Dazu ist Motorwicklung 34a mit der ersten Steuer- und Regeleinheit A und die andere Motorwicklung 34b mit der zweiten Steuer- und Regeleinheit B verbunden. Zur Ansteuerung der Druckquelle 2 umfasst jede der beiden Steuer- und Regeleinheiten A, B einen Motorprozessor zur Verarbeitung der Motor-Regelfunktionen, eine Endstufe mit Transistoren zur Bereitstellung der Phasenspannungen am Elektromotor 32 (z.B. B6-Brücke) und eine Treiberstufe (Gate Drive Unit) zur Ansteuerung der Transistoren der Endstufe. Vorteilhafterweise wird Steuer- und Regeleinheit A von einer ersten elektrischen Energieversorgung versorgt und Steuer- und Regeleinheit B von einer zweiten, von der ersten Energieversorgung unabhängigen, elektrischen Energieversorgung versorgt.

Gemäß eines alternativen, zweiten erfindungsgemäßen Ausführungsbeispiels der Druckquelle 2 und deren Ansteuerung, welches in den Bremsensteuergeräten 1 der Ausführungsbeispiele der Fig. 1 bis 6 umgesetzt sein kann, wird die Druckquelle 2 durch eine Zylinder-Kolben-Anordnung mit einem Druckraum 30 und einem Kolben 31 gebildet, wobei der Kolben 31 durch einen elektromechanischen Aktuator 32, 33 vor- und zurückschiebbar ist, und wobei der elektromechanische Aktuator einen einfach gewickelten Elektromotor 32 mit nur einer Motorwicklung umfasst. Zur Ansteuerung der Druckquelle 2 umfasst jede der Steuer- und Regeleinheiten A, B einen Motorprozessor zur Verarbeitung der Motor-Regelfunktionen, eine Endstufe mit Transistoren zur Bereitstellung der Phasenspannungen am Elektromotor 32 (z.B. B6-Brücke) und eine Treiberstufe (Gate Drive Unit) zur Ansteuerung der Transistoren der Endstufe. So kann jede der Steuer- und Regeleinheiten A, B, die für den Betrieb des Elektromotor 32 benötigten Phasenspannungen zur Verfügung stellen. Beide Endstufen (bzw. beide Steuer- und Regeleinheiten A, B) sind mit der Motorwicklung eines einfach gewickelten Elektromotors 32 verbunden. Die Endstufen sind derart ausgeführt, dass deren Ausgänge im passiven Zustand bzw. bei Ausfall der zugehörigen Steuer- und Regeleinheit A oder B hochohmig sind. So kann die Motorwicklung des Elektromotors 32 von einer beliebigen Steuer- und Regeleinheiten A oder B angesteuert werden, und bei deren Ausfall kann die andere Steuer- und Regeleinheit B oder A diese Aufgabe übernehmen. Motorprozessor, Treiber- und Endstufe sind also redundant ausgeführt und der Elektromotor 32 ist einfach gewickelt. Vorteilhafterweise wird Steuer- und Regeleinheit A von einer ersten elektrischen Energieversorgung versorgt und Steuer- und Regeleinheit B von einer zweiten, von der ersten Energieversorgung unabhängigen, elektrischen Energieversorgung versorgt.

Gemäß eines alternativen, dritten erfindungsgemäßen Ausführungsbeispiels der Druckquelle 2 und deren Ansteuerung, welches in den Bremsensteuergeräten 1 der Ausführungsbeispiele der Fig. 1 bis 6 umgesetzt sein kann, wird die Druckquelle 2 durch eine Zylinder-Kolben-Anordnung mit einem Druckraum 30 und einem Kolben 31 gebildet, wobei der Kolben 31 durch einen elektromechanischen Aktuator 32, 33 vor- und zurückschiebbar ist, und wobei der elektromechanische Aktuator einen einfach gewickelten Elektromotor 32 mit nur einer Motorwicklung umfasst. Neben der ersten elektronischen Steuer- und Regeleinheit A und der zweiten elektronischen Steuer- und Regeleinheit B ist eine dritte elektronische Steuer- und Regeleinheit vorhanden. Zur Ansteuerung der Druckquelle 2 umfasst jede der Steuer- und Regeleinheiten A, B einen Motorprozessor zur Verarbeitung der Motor-Regelfunktionen. Auf der dritten Steuer- und Regeleinheit sind redundante (d.h. zumindest zwei) Endstufen mit Transistoren zur Bereitstellung der Phasenspannungen am Elektromotor 32 (z.B. B6-Brücke) und redundante (d.h. zumindest zwei) Treiberstufen (Gate Drive Units) zur Ansteuerung der Transistoren der Endstufe vorhanden. Die dritte Steuer- und Regeleinheit umfasst außerdem mehrere Relais, die es ermöglichen, dass jeder Motorprozessor seine Ausgangssignale an jede der beiden Treiberstufen übermitteln kann und jede Treiberstufe jede Endstufe ansteuern kann. Die Ausgänge beider Endstufen sind mit der Wicklung eines einfach gewickelten Motors verbunden. Treiber- und Endstufe sind also redundant auf einer dritten Steuer- und Regeleinheit ausgeführt und der Elektromotor 32 ist einfach gewickelt.

Vorteilhafterweise wird bei dem dritten Ausführungsbeispiel der Druckquelle 2 und deren Ansteuerung die erste Steuer- und Regeleinheit A von einer ersten elektrischen Energieversorgung versorgt und die zweite Steuer- und Regeleinheit B von einer zweiten, von der ersten Energieversorgung unabhängigen, elektrischen Energieversorgung versorgt (sog. redundantes Bordnetz). Darüber hinaus wird die dritte Steuer- und Regeleinheit vorteilhafterweise an die beiden unabhängigen Energieversorgungen (Spannungsquellen) des redundanten Bordnetzes angeschlossen. Über weitere Relais lässt sich die Energieversorgung (Spannungsversorgung) der dritten Steuer- und Regeleinheit bzw. der Treiber- und Endstufen auch bei Ausfall einer der Energieversorgungen (Spannungsquellen) gewährleisten, indem auf die andere Energieversorgung (Spannungsquelle) umgeschaltet wird.

Das dritte Ausführungsbeispiel der Druckquelle 2 und deren Ansteuerung ermöglicht eine Ansteuerung des Elektromotors 32 bei mehr elektronischen Doppelfehlern als das zweite Ausführungsbeispiel der Druckquelle 2 und deren Ansteuerung. Zu solchen Doppelfehlern zählen zum Beispiel der gleichzeitige Ausfall einer Treiberstufe und einer beliebigen Endstufe oder der gleichzeitige Ausfall eines Motorprozessors und einer beliebigen Treiberstufe oder der gleichzeitige Ausfall einer Endstufe und einer beliebigen Spannungsquelle.

Gemäß eines alternativen, vierten erfindungsgemäßen Ausführungsbeispiels der Druckquelle 2 und deren Ansteuerung, welches in den Bremsensteuergeräten 1 der Ausführungsbeispiele der Fig. 1 bis 6 umgesetzt sein kann, wird die Druckquelle 2 durch eine Zylinder-Kolben-Anordnung mit einem Druckraum 30 und einem Kolben 31 gebildet, wobei der Kolben 31 durch einen elektromechanischen Aktuator 32, 33 vor- und zurückschiebbar ist, der zwei (e.g. einfach gewickelte) Elektromotoren 32 umfasst. Beispielsgemäß steuert jeder der zwei Elektromotoren einen von zwei Kugelgewindetrieben. Die Kugelgewindetriebe wirken auf die beiden Enden eines Waagebalkens, dessen Mitte mechanisch mit dem Kolben 31 verbunden ist. Im fehlerfreien Betrieb werden die Kugelgewindetriebe parallel rein- und rausgefahren, um den Kolben 31 zu bewegen und Druck in den Radbremsen auf- bzw. abzubauen. Bei Ausfall eines Elektromotors kann der verbleibende funktionsfähige Elektromotor noch ein Ende des Waagebalkens bewegen und damit den Kolben 31 vor- und zurückfahren. In diesem Fall ist die Kraft, die auf den Kolben 31 ausgeübt werden kann, geringer und ggf. der verfügbare Bewegungsumfang vermindert. Zur Ansteuerung der Druckquelle 2 umfasst jede der Steuer- und Regeleinheiten A, B einen Motorprozessor zur Verarbeitung der Motor-Regelfunktionen, eine Endstufe mit Transistoren zur Bereitstellung der Phasenspannungen am Elektromotor 32 (z.B. B6-Brücke) und eine Treiberstufe (Gate Drive Unit) zur Ansteuerung der Transistoren der Endstufe. Die Endstufe der ersten Steuer- und Regeleinheit A ist mit dem einen Elektromotor verbunden, die Endstufe der zweiten Steuer- und Regeleinheit B ist mit dem anderen Elektromotor verbunden. D.h. die erste Steuer- und Regeleinheit A steuert den ersten Elektromotor 32 an und die zweite Steuer- und Regeleinheit B steuert den zweiten Elektromotor 32. Vorteilhafterweise wird Steuer- und Regeleinheit A von einer ersten elektrischen Energieversorgung versorgt und Steuer- und Regeleinheit B von einer zweiten, von der ersten Energieversorgung unabhängigen, elektrischen Energieversorgung versorgt.

Das erfindungsgemäße elektrohydraulische Bremsensteuergerät 1 wird bevorzugt in einem Bremssystem mit einer Betätigungseinheit für einen Fahrzeugführer und zumindest zwei elektrisch betätigbaren Parkbremsen 50a, 50b eingesetzt. Besonders bevorzugt sind die Parkbremsen an einer Achse des Fahrzeugs, vorteilhafterweise der Hinterachse (Rear), angeordnet. Dabei ist die Betätigungseinheit mit dem Bremsensteuergerät 1 signalseitig zur Übermittlung eines Fahrerwunschsignals verbunden, eine mechanisch-hydraulische Verbindung von der Betätigungseinheit zu dem Bremsensteuergerät 1 besteht jedoch nicht.

Es werden verschiedene Varianten eines Bremsensteuergeräts 1 vorgeschlagen, welches als Zentraleinheit den Druck für vier hydraulische Radbremsen 5a-5d erzeugt und moduliert, und speziell zur Verwendung in einem Bremssystem ohne mechanisch-hydraulische Fahrer-Rückfallebene geeignet ist. Das Bremssystem besteht vorteilhafterweise im Wesentlichen aus einem zentralen, elektrohydraulischen Bremsensteuergerät 1 und aus einer Betätigungseinheit für den Fahrer, die mit dem zentralen Bremsensteuergerät 1 nur durch die ausfallsichere Übermittlung eines Fahrerwunschsignals verbunden ist. Außerdem sind an einer Achse (typischerweise der Hinterachse) elektrische Parkbremsen vorgesehen, die ebenfalls vom zentralen Bremsensteuergerät 1 angesteuert werden.

Alle Ausführungsbeispiele sind von der Anforderung geprägt, dass es nach jedem elektrischen oder elektronischen Einzelfehler möglich sein soll, alle vier Räder zu bremsen. Nach einem mechanischen Fehler, wie zum Beispiel einer Leckage, soll es dagegen zulässig sein, das Fahrzeug nur über die dynamische Bremsfunktion der elektrischen Parkbremsen 50a, 50b zu verzögern, gegebenenfalls mit Unterstützung durch einen elektrischen Antriebsstrang. Eine dafür geeignete Lage des Fahrzeugschwerpunkts ist bei heutigen Fahrzeugen in der Regel gegeben und wird vorausgesetzt. Diese Anforderung gründet sich auf der Erfahrung, dass mechanische Fehler wesentlich seltener auftreten als elektronische Fehler.

Alle vorgeschlagenen hydraulischen Bremsensteuergeräte 1 erfüllen die Grundanforderung der Vierradbremsung nach elektrischem Fehler unter anderem dadurch, dass sie von zwei getrennten Steuer- und Regeleinheiten A und B angesteuert werden, die über redundante Signalleitungen 70 verbunden sind. Weiterhin sind elektrische und/oder elektronische Mittel vorgesehen, die dazu konfiguriert sind, dass bei einem Ausfall der ersten elektronischen Steuer- und Regeleinheit A der elektromechanische Aktuator mittels der zweiten elektronischen Steuer- und Regeleinheit B angesteuert wird und einen Druck zur Betätigung der Radbremsen 5a-5d aufbaut, und dass bei einem Ausfall der zweiten elektronischen Steuer- und Regeleinheit B der elektromechanische Aktuator 32 mittels der ersten elektronischen Steuer- und Regeleinheit A angesteuert wird und einen Druck zur Betätigung der Radbremsen 5a-5d aufbaut. Die elektrischen und/oder elektronischen Mittel sind also derart ausgelegt, dass bei einem Ausfall einer (bzw. jeder) der beiden Steuer- und Regeleinheiten A oder **B,** die verbleibende funktionsfähige Steuer- und Regeleinheiten B oder A den elektromechanischen Aktuator der (einzigen) Druckquelle 2 zumindest mit einem Teil seiner Leistung zum Aufbau eines Druckes zur Betätigung der Radbremsen in einer brake-by-wire Betriebsart zur Betriebsbremsung ansteuern kann.

Außerdem enthält das Bremsensteuergerät 1 Ventile und Sensoren, die jeweils genau einer Steuer- und Regeleinheit A oder B zugeordnet sind.

Die redundanten Signalleitungen 70 zwischen den Steuer- und Regeleinheiten A und B verhindern, dass bei einem Fehler in einer der Signalleitungen, die Steuer- und Regeleinheiten fälschlicherweise einen Ausfall bzw. ein fehlerfreies Funktionieren der jeweils anderen Steuer- und Regeleinheit detektieren.

Vorteilhafterweise wird das Bremsensteuergerät 1 von einem redundanten Bordnetz mit zwei unabhängigen Spannungsquellen (erste elektrische Energieversorgung und zweite elektrische Energieversorgung) versorgt, sodass nicht beide Steuer- und Regeleinheiten A und B von der gleichen Spannungsquelle versorgt werden. Beispielsweise wird Steuer- und Regeleinheiten A von der ersten elektrischen Energieversorgung versorgt und Steuer- und Regeleinheiten B von der zweiten elektrischen Energieversorgung versorgt.

## Patentansprüche

1. Elektrohydraulisches Bremsensteuergerät (1) für ein Kraftfahrzeug mit zumindest zwei ersten Ausgangsanschlüssen (4a, 4b) und zwei zweiten Ausgangsanschlüssen (4c, 4d) für zumindest vier hydraulisch betätigbare Radbremsen (5a-5d), einer elektrisch ansteuerbaren hydraulischen Druckquelle (2), einer ersten elektronischen Steuer- und Regeleinheit (A), einer zweiten elektronischen Steuer- und Regeleinheit (B), einem, insbesondere unter Atmosphärendruck stehenden, Druckmittelvorratsbehälter (3), einem Einlassventil (6a-6d) je erstem und zweitem Ausgangsanschluss (4a-4d), und einem Auslassventil (7a-7d) je erstem und zweitem Ausgangsanschluss (4a-4d), über welches der jeweilige Ausgangsanschluss (4a-4d) mit dem Druckmittelvorratsbehälter (3) verbunden ist, wobei die Druckquelle (2) durch eine Zylinder-Kolben-Anordnung mit einem Druckraum (30) und einem Kolben (31) gebildet wird, wobei der Kolben (31) durch einen elektromechanischen Aktuator (32, 33) vor- und zurückschiebbar ist, wobei elektrische und/oder elektronische Mittel vorgesehen sind, die dazu konfiguriert sind, dass bei einem Ausfall der ersten elektronischen Steuer- und Regeleinheit (A) der elektromechanische Aktuator mittels der zweiten elektronischen Steuer- und Regeleinheit (B) angesteuert wird und einen Druck zur Betätigung der Radbremsen (5a-5d) aufbaut, und dass bei einem Ausfall der zweiten elektronischen Steuer- und Regeleinheit (B) der elektromechanische Aktuator (32) mittels der ersten elektronischen Steuer- und Regeleinheit (A) angesteuert wird und einen Druck zur Betätigung der Radbremsen (5a-5d) aufbaut, **dadurch gekennzeichnet, dass** der Druckraum (30) über ein erstes elektrisch betätigbares Druckzuschaltventil (9, 19) mit einem Bremsleitungsabschnitt (60) verbunden ist, an welchen die zumindest vier Einlassventile (6a-6d) angeschlossen sind.

2. Elektrohydraulisches Bremsensteuergerät (1) nach Anspruch 1, **dadurch gekennzeichnet, dass** die elektrischen und/oder elektronischen Mittel umfassen, dass der elektromechanische Aktuator (32, 33) einen doppelt gewickelten Elektromotor (32) mit einer ersten Motorwicklung (34a) und einer zweiten Motorwicklung (34b) umfasst, wobei die erste Motorwicklung (34a) von der ersten elektronischen Steuer- und Regeleinheit (A) und die zweite Motorwicklung (34b) von der zweiten elektronischen Steuer- und Regeleinheit (B) angesteuert wird.

3. Elektrohydraulisches Bremsensteuergerät (1) nach Anspruch 1 oder 2, **dadurch gekennzeichnet, dass** das erste Druckzuschaltventil (9, 19) und zumindest die Einlass- und Auslassventile (6a, 7a, 6b,7b) der ersten Ausgangsanschlüsse (4a, 4b) von der ersten elektronischen Steuer- und Regeleinheit (A) betätigt werden.

4. Elektrohydraulisches Bremsensteuergerät (1) nach einem der Ansprüche 1 bis 3, **dadurch gekennzeichnet, dass** das erste elektrisch betätigbare Druckzuschaltventil (9) stromlos geschlossen ausgeführt ist und der Druckraum (30) über ein zweites elektrisch betätigbares, stromlos geschlossen ausgeführtes Druckzuschaltventil (10) mit dem Bremsleitungsabschnitt (60) verbunden ist, welches von der zweiten elektronischen Steuer- und Regeleinheit (B) betätigt wird;
oder dass
das erste elektrisch betätigbare Druckzuschaltventil (19) stromlos offen ausgeführt ist.

5. Elektrohydraulisches Bremsensteuergerät (1) nach einem der vorhergehenden Ansprüche, **dadurch gekennzeichnet, dass** in dem Bremsleitungsabschnitt (60) zwischen dem ersten elektrisch betätigbaren Druckzuschaltventil (9, 19) und jedem der Einlassventile (6a-6d) kein elektrisch betätigbares Ventil, insbesondere kein Ventil, angeordnet ist.

6. Elektrohydraulisches Bremsensteuergerät (1) nach einem der vorhergehenden Ansprüche, **dadurch gekennzeichnet, dass** die Einlass- und Auslassventile (6c, 7c, 6d,7d) der zweiten Ausgangsanschlüsse (4c, 4d) von der ersten elektronischen Steuer- und Regeleinheit (A) betätigt werden und dass der Bremsleitungsabschnitt (60) über eine Trennventilvorrichtung mit zumindest einem ersten elektrisch betätigbaren Trennventil (12, 13) mit dem Druckmittelvorratsbehälter (3) verbunden ist, wobei das erste Trennventil (12, 13) von der zweiten elektronischen Steuer- und Regeleinheit (B) betätigt wird.

7. Elektrohydraulisches Bremsensteuergerät (1) nach Anspruch 6, **dadurch gekennzeichnet, dass** das erste Trennventil (13) stromlos geschlossen ausgeführt ist und die Trennventilvorrichtung nur das erste elektrisch betätigbare Trennventil (13) umfasst.

8. Elektrohydraulisches Bremsensteuergerät (1) nach einem der Ansprüche 1 bis 5, **dadurch gekennzeichnet, dass** die Einlass- und Auslassventile (6c, 7c, 6d,7d) der zweiten Ausgangsanschlüsse (4c, 4d) von der zweiten elektronischen Steuer- und Regeleinheit (B) betätigt werden.

9. Elektrohydraulisches Bremsensteuergerät (1) nach Anspruch 7 oder 8, **dadurch gekennzeichnet, dass** einem der Auslassventile (7d) ein in Richtung des Ausgangsanschlusses (4d) öffnendes Rückschlagventil (18) parallelgeschaltet ist.

10. Elektrohydraulisches Bremsensteuergerät (1) nach einem der vorhergehenden Ansprüche, **dadurch gekennzeichnet, dass** jedes der Einlassventile (6a-6d) analog ansteuerbar und stromlos offen ausgeführt ist und jedes der Auslassventile (7a-7d) stromlos geschlossen ausgeführt ist.

11. Elektrohydraulisches Bremsensteuergerät (1) nach einem der Ansprüche 1 bis 5, **dadurch gekennzeichnet, dass** die Auslassventile (7c, 7d) der zweiten Ausgangsanschlüsse (4c, 4d) stromlos offen ausgeführt sind.

12. Elektrohydraulisches Bremsensteuergerät (1) nach Anspruch 11, **dadurch gekennzeichnet, dass** die Einlassventile (6c, 6d) der zweiten Ausgangsanschlüsse (4c, 4d) von der ersten elektronischen Steuer- und Regeleinheit (A) betätigt werden und die Auslassventile (7c, 7d) der zweiten Ausgangsanschlüsse (4c, 4d) von der zweiten elektronischen Steuer- und Regeleinheit (B) betätigt werden,
und/oder
dass für den einen zweiten Ausgangsanschluss (4c) das Einlassventil (6c) von der ersten elektronischen Steuer- und Regeleinheit (A) betätigt wird und das Auslassventil (7c) von der zweiten elektronischen Steuer- und Regeleinheit (B) betätigt wird, und dass für den anderen zweiten Ausgangsanschluss (4d) das Einlassventil (6d) von der zweiten elektronischen Steuer- und Regeleinheit (B) betätigt wird und das Auslassventil (7d) von der ersten elektronischen Steuer- und Regeleinheit (A) betätigt wird.

13. Elektrohydraulisches Bremsensteuergerät (1) nach einem der vorhergehenden Ansprüche, **dadurch gekennzeichnet, dass** an den, den Radbremsen (5c, 5d) der zweiten Ausgangsanschlüsse (4c, 4d) zugeordneten Rädern elektrisch betätigbare Parkbremsen (50a, 50b) vorgesehen sind, wobei die elektrisch betätigbaren Parkbremsen (50a, 50b) von der ersten elektronischen Steuer- und Regeleinheit (A) betätigt werden.

14. Elektrohydraulisches Bremsensteuergerät (1) nach Anspruch 12, **dadurch gekennzeichnet, dass** an dem Rad, welches dem einen zweiten Ausgangsanschluss (4c) zugeordnet ist, eine erste elektrische betätigbare Parkbremse (50a) vorgesehen ist, welche von der ersten elektronischen Steuer- und Regeleinheit (A) betätigt wird, und dass an dem Rad, welches dem anderen zweiten Ausgangsanschluss (4d) zugeordnet ist, eine zweite elektrische betätigbare Parkbremse (50b) vorgesehen ist, welche von der zweiten elektronischen Steuer- und Regeleinheit (B) betätigt wird.

15. Bremssystem mit einer Betätigungseinheit für einen Fahrzeugführer und einem elektrohydraulischen Bremsensteuergerät (1) nach einem der vorhergehenden Ansprüche, wobei die Betätigungseinheit mit dem Bremsensteuergerät (1) durch eine Übermittlung eines Fahrerwunschsignals verbunden ist und keine mechanisch-hydraulische Verbindung von der Betätigungseinheit zu dem Bremsensteuergerät (1) besteht.

## Claims

1. An electrohydraulic break controller (1) for a motor vehicle comprising at least two first output ports (4a, 4b) and two second output ports (4c, 4d) for at least four hydraulically actuable wheel brakes (5a-5d), an electrically controllable hydraulic pressure source (2), a first electronic open-loop and closed-loop control unit (A), a second electronic open-loop and closed-loop control unit (B), a pressure medium reservoir (3), in particular under atmospheric pressure, an inlet valve (6a-6d) for each first and second output port (4a-4d), and an outlet valve (7a-7d) for each first and second output port (4a-4d), via which the respective output port (4a-4d) is connected to the pressure medium reservoir (3),
wherein the pressure source (2) is formed by a cylinder-piston assembly comprising a pressure chamber (30) and a piston (31), wherein the piston (31) is slidable back and forth by an electromechanical actuator (32, 33), wherein electrical and/or electronic means are provided which are configured such that, if the first electronic open-loop and closed-loop control unit (A) fails, the electromechanical actuator is controlled by the second electronic open-loop and closed-loop control unit (B) and builds up pressure to actuate the wheel brakes (5a-5d), and that, if the second electronic open-loop and closed-loop control unit (B) fails, the electromechanical actuator (32) is controlled by the first electronic open-loop and closed-loop control unit (A) and builds up pressure to actuate the wheel brakes (5a-5d), **characterized in that** the pressure chamber (30) is connected via a first electrically actuable pressure sequence valve (9, 19) to a brake line section (60) which the at least four inlet valves (6a-6d) are connected to.

2. The electrohydraulic brake controller (1) as claimed in claim 1, **characterized in that** the electrical and/or electronic means comprise the electromechanical actuator (32, 33) comprising a double-wound electric motor (32) having a first motor winding (34a) and a second motor winding (34b), wherein the first motor winding (34a) is controlled by the first electronic open-loop and closed-loop control unit (A), and the second motor winding (34b) is controlled by the second electronic open-loop and closed-loop control unit (B).

3. The electrohydraulic brake controller (1) as claimed in claim 1 or 2, **characterized in that** the first pressure sequence valve (9, 19) and at least the inlet and outlet valves (6a, 7a, 6b, 7b) of the first output ports (4a, 4b) are actuated by the first electronic open-loop and closed-loop control unit (A).

4. The electrohydraulic brake controller (1) as claimed in any one of claims 1 to 3, **characterized in that** the first electrically actuable pressure sequence valve (9) is normally closed and the pressure chamber (30) is connected to the brake line section (60) via a second electrically actuable pressure sequence valve (10) which is normally closed and which is actuated by the second electronic open-loop and closed-loop control unit (B);
or that
the first electrically actuable pressure sequence valve (19) is normally open.

5. The electrohydraulic brake controller (1) as claimed in any one of the preceding claims, **characterized in that** no electrically actuable valve, in particular no valve, is arranged in the brake line section (60) between the first electrically actuable pressure sequence valve (9, 19) and each of the inlet valves (6a-6d).

6. The electrohydraulic brake controller (1) as claimed in any one of the preceding claims, **characterized in that** the inlet and outlet valves (6c, 7c, 6d, 7d) of the second output ports (4c, 4d) are actuated by the first electronic open-loop and closed-loop control unit (A), and that the brake line section (60) is connected to the pressure medium reservoir (3) via a separation valve device comprising at least one first electrically actuable separation valve (12, 13), wherein the first separation valve (12, 13) is actuated by the second electronic open-loop and closed-loop control unit (B).

7. The electrohydraulic brake controller (1) as claimed in claim 6, **characterized in that** the first separation valve (13) is normally closed, and the separation valve device comprises only the first electrically actuable separation valve (13).

8. The electrohydraulic brake controller (1) as claimed in any one of claims 1 to 5, **characterized in that** the inlet and outlet valves (6c, 7c, 6d, 7d) of the second output ports (4c, 4d) are actuated by the second electronic open-loop and closed-loop control unit (B).

9. The electrohydraulic brake controller (1) as claimed in claim 7 or 8, **characterized in that** a non-return valve (18) opening in the direction of the output port (4d) is connected in parallel relative to one of the outlet valves (7d).

10. The electrohydraulic brake controller (1) as claimed in any one of the preceding claims, **characterized in that** each of the inlet valves (6a-6d) is controllable analogously and is normally open, and each of the outlet valves (7a-7d) is normally closed.

11. The electrohydraulic brake controller (1) as claimed in any one of claims 1 to 5, **characterized in that** the outlet valves (7c, 7d) of the second output ports (4c, 4d) are normally open.

12. The electrohydraulic brake controller (1) as claimed in claim 11, **characterized in that** the inlet valves (6c, 6d) of the second output ports (4c, 4d) are actuated by the first electronic open-loop and closed-loop control unit (A), and the outlet valves (7c, 7d) of the second output ports (4c, 4d) are actuated by the second electronic open-loop and closed-loop control unit (B);
and/or
that for the one second output port (4c), the inlet valve (6c) is actuated by the first electronic open-loop and closed-loop control unit (A), and the outlet valve (7c) is actuated by the second electronic open-loop and closed-loop control unit (B), and that for the other second output port (4d), the inlet valve (6d) is actuated by the second electronic open-loop and closed-loop control unit (B), and the outlet valve (7d) is actuated by the first electronic open-loop and closed-loop control unit (A).

13. The electrohydraulic brake controller (1) as claimed in any one of the preceding claims, **characterized in that** electrically actuable parking brakes (50a, 50b) are provided on the wheels associated with the wheel brakes (5c, 5d) of the second output ports (4c, 4d), wherein the electrically actuable parking brakes (50a, 50b) are actuated by the first electronic open-loop and closed-loop control unit (A).

14. The electrohydraulic brake controller (1) as claimed in claim 12, **characterized in that** a first electrically actuable parking brake (50a), which is actuated by the first electronic open-loop and closed-loop control unit (A), is provided on the wheel associated with the one second output port (4c), and that a second electrically actuable parking brake (50b), which is actuated by the second electronic open-loop and closed-loop control unit (B), is provided on the wheel associated with the other second output port (4d).

15. A brake system comprising an actuation unit for a vehicle driver and an electrohydraulic brake controller (1) as claimed in any one of the preceding claims, wherein the actuation unit is connected to the brake controller (1) by transmitting a driver's request signal, and there is no mechanical-hydraulic connection from the actuation unit to the brake controller (1).

## Revendications

1. Unité de commande de freinage électro-hydraulique (1) conçue pour un véhicule automobile avec au moins deux premières connexions de sortie (4a, 4b) et deux secondes connexions de sortie (4c, 4d) pour au moins quatre freins de roue à actionnement hydraulique (5a-5d), une source de pression hydraulique à commande électrique (2), une première unité de commande et de réglage électronique (A), une seconde unité de commande et de réglage électronique (B), un réservoir de fluide sous pression (3), notamment à pression atmosphérique, une soupape d'admission (6a-6d) pour chaque première et seconde connexion de sortie (4a-4d), et une soupape d'échappement (7a-7d) pour chaque première et seconde connexion de sortie (4a-4d), par laquelle la connexion de sortie respective (4a-4d) est reliée au réservoir de fluide sous pression (3),
dans laquelle la source de pression (2) est formée par un ensemble cylindre-piston avec une chambre de pression (30) et un piston (31), dans laquelle le piston (31) peut être déplacé d'avant en arrière par un actionneur électromécanique (32, 33), dans laquelle sont prévus des moyens électriques et/ou électroniques, qui sont configurés de telle sorte qu'en cas de défaillance de la première unité de commande et de réglage électronique (A), l'actionneur électromécanique est commandé au moyen de la seconde unité de commande et de réglage électronique (B) et génère une pression pour actionner les freins de roue (5a-5d), et qu'en cas de défaillance de la seconde unité de commande et de réglage électronique (B), l'actionneur électromécanique (32) est commandé au moyen de la première unité de commande et de réglage électronique (A) et génère une pression pour actionner les freins de roue (5a-5d), **caractérisé en ce que** la chambre de pression (30) est reliée par l'intermédiaire d'une première soupape de commutation de pression à actionnement électrique (9, 19) à une section de conduite de frein (60), à laquelle les au moins quatre soupapes d'admission (6a-6d) sont connectées.

2. Unité de commande de freinage électro-hydraulique (1) selon la revendication 1, **caractérisée en ce que** les moyens électriques et/ou électroniques comprennent que l'actionneur électromécanique (32, 33) comprend un moteur électrique à double enroulement (32) avec un premier enroulement de moteur (34a) et un second enroulement de moteur (34b), dans laquelle le premier enroulement de moteur (34a) est commandé par la première unité de commande et de réglage électronique (A) et le second enroulement de moteur (34b) est commandé par la seconde unité de commande et de réglage électronique (B).

3. Unité de commande de freinage électro-hydraulique (1) selon la revendication 1 ou 2, **caractérisée en ce que** la première soupape de commutation de pression (9, 19) et au moins les soupapes d'admission et d'échappement (6a, 7a, 6b, 7b) des premières connexions de sortie (4a, 4b) sont actionnées par la première unité de commande et de réglage électronique (A).

4. Unité de commande de freinage électro-hydraulique (1) selon l'une des revendications 1 à 3, **caractérisée en ce que** la première soupape de commutation de pression à actionnement électrique (9) est réalisée de manière à être fermée en l'absence de courant et la chambre de pression (30) est reliée, par l'intermédiaire d'une seconde soupape de commutation de pression à actionnement électrique (10) réalisée de manière à être fermée en l'absence de pression, à la section de conduite de frein (60), laquelle est actionnée par la seconde unité de commande et de réglage électronique (B) ;
ou **en ce que**
la première soupape de commutation de pression à actionnement électrique (19) est réalisée de manière à être ouverte en l'absence de courant.

5. Unité de commande de freinage électro-hydraulique (1) selon l'une des revendications précédentes, **caractérisée en ce qu'**aucune soupape à actionnement électrique, en particulier aucune soupape, n'est disposée dans la section de conduite de frein (60) entre la première soupape de commutation de pression à actionnement électrique (9, 19) et chacune des soupapes d'admission (6a-6d).

6. Unité de commande de freinage électro-hydraulique (1) selon l'une des revendications précédentes, **caractérisée en ce que** les soupapes d'admission et d'échappement (6c, 7c, 6d, 7d) des secondes connexions de sortie (4c, 4d) sont actionnées par la première unité de commande et de réglage électronique (A) et que la section de conduite de frein (60) est reliée au réservoir de fluide sous pression (3) par l'intermédiaire d'un dispositif de soupape de séparation avec au moins une première soupape de séparation à actionnement électrique (12, 13), dans laquelle la première soupape de séparation (12, 13) est actionnée par la seconde unité de commande et de réglage électronique (B).

7. Unité de commande de freinage électro-hydraulique (1) selon la revendication 6, **caractérisée en ce que** la première soupape de séparation (13) est réalisée de manière à être fermée en l'absence de courant et le dispositif de soupape de séparation ne comprend que la première soupape de séparation à actionnement électrique (13).

8. Unité de commande de freinage électro-hydraulique (1) selon l'une des revendications 1 à 5, **caractérisée en ce que** les soupapes d'admission et d'échappement (6c, 7c, 6d, 7d) des secondes connexions de sortie (4c, 4d) sont actionnées par la seconde unité de commande et de réglage électronique (B).

9. Unité de commande de freinage électro-hydraulique (1) selon la revendication 7 ou 8, **caractérisée en ce qu'**un clapet antiretour (18) s'ouvrant en direction de la connexion de sortie (4d) est monté en parallèle avec l'une des soupapes d'admission (7d).

10. Unité de commande de freinage électro-hydraulique (1) selon l'une des revendications précédentes, **caractérisée en ce que** chacune des soupapes d'admission (6a-6d) est commandée de manière analogue et est réalisée de manière à être ouverte en l'absence de courant et chacune des soupapes d'échappement (7a-7d) est réalisée de manière à être fermée en l'absence de courant.

11. Unité de commande de freinage électro-hydraulique (1) selon l'une des revendications 1 à 5, **caractérisée en ce que** les soupapes d'échappement (7c, 7d) des secondes connexions de sortie (4c, 4d) sont réalisées de manière à être ouvertes en l'absence de courant.

12. Unité de commande de freinage électro-hydraulique (1) selon la revendication 11, **caractérisée en ce que** les soupapes d'admission (6c, 6d) des secondes connexions de sortie (4c, 4d) sont actionnées par la première unité de commande et de réglage électronique (A) et les soupapes d'échappement (7c, 7d) des secondes connexions de sortie (4c, 4d) sont actionnées par la seconde unité de commande et de réglage électronique (B) ;
et/ou
**en ce que**, pour l'une seconde connexion de sortie (4c), la soupape d'admission (6c) est actionnée par la première unité de commande et de réglage électronique (A) et la soupape d'échappement (7c) est actionnée par la seconde unité de commande et de réglage électronique (B), et que, pour l'autre seconde connexion de sortie (4d), la soupape d'admission (6d) est actionnée par la seconde unité de commande et de réglage électronique (B) et la soupape d'échappement (7d) est actionnée par la première unité de commande et de réglage électronique (A).

13. Unité de commande de freinage électro-hydraulique (1) selon l'une des revendications précédentes, **caractérisée en ce que** des freins de stationnement à actionnement électrique (50a, 50b) sont prévus sur les roues associées aux freins de roue (5c, 5d) des secondes connexions de sortie (4c, 4d), dans laquelle les freins de stationnement à actionnement électrique (50a, 50b) sont actionnés par la première unité de commande et de réglage électronique (A).

14. Unité de commande de freinage électro-hydraulique (1) selon la revendication 12, **caractérisée en ce qu'**un premier frein de stationnement à actionnement électrique (50a) est prévu sur la roue qui est associée à l'une seconde connexion de sortie (4c), qui est actionné par la première unité de commande et de réglage électronique (A), et qu'un second frein de stationnement à actionnement électrique (50b) est prévu sur la roue qui est associée à l'autre seconde connexion de sortie (4d), qui est actionné par la seconde unité de commande et de réglage électronique (B).

15. Système de freinage avec une unité d'actionnement pour un conducteur de véhicule et une unité de commande de freinage électro-hydraulique (1) selon l'une des revendications précédentes, dans lequel l'unité d'actionnement est reliée à l'unité de commande de freinage (1) par une transmission d'un signal de demande du conducteur, et il n'y a pas de connexion mécanique-hydraulique entre l'unité d'actionnement et l'unité de commande de freinage (1).
